# EUROPEAN PATENT SPECIFICATION

(11) **EP 4 325 841 B1**
(45) Date of publication and mention of the grant of the patent: **11.02.2026**
(21) Application number: 23202538.7
(22) Date of filing: 17.09.2010
(51) Int. Cl.: H04N 7/173

(54) **SYSTEM FOR NOTIFYING A COMMUNITY OF INTERESTED USERS ABOUT PROGRAMS OR SEGMENTS**
SYSTEM ZUR BENACHRICHTIGUNG EINER GEMEINSCHAFT AUS INTERESSIERTEN BENUTZERN ÜBER PROGRAMME ODER SEGMENTE
SYSTÈME DE NOTIFICATION DE PROGRAMMES OU DE SEGMENTS À UNE COMMUNAUTÉ D'UTILISATEURS INTÉRESSÉS

(30) Priority: 29.09.2009 US 56896709
(43) Date of publication of application: 21.02.2024
(62) Divisional of application: 10768096.9
(73) Proprietor: Adeia Guides Inc., San Jose, CA 95134 (US)
(72) Inventor: DRUMMOND, Mitch B., Tulsa, 74120 (US); LEE, Christopher Watson, Lansdowne, 19050 (US); MILAZZO, Paul George, Hockessin, 19707-9335 (US)
(74) Representative: HG Law International LLP

(56) References cited:
- WO-A2-2009/016544
- US-A1- 2002 069 218
- US-B1- 6 996 627

## Description

### Background of the Invention

This invention relates generally to interactive media guidance applications, and more particularly to automatically notifying a community group of users when program segments of interest are located and become available for viewing or downloading.

During the course of viewing broadcast content on user equipment (e.g., a television or a computer) or a user equipment device (e.g., mobile phone), a user may be able to identify particular segments of interest that he or she may want to view, download for future viewing, and/or share with other users that may be potentially interested in the program segment (e.g., other users in a virtual community group that may be interested in similar types of program segment content). For example, while watching a popular talk show, the user may identify a ten minute program segment at the beginning of the talk show (e.g. an introductory monologue by the talk show host) of interest to the user. In particular, the user may want to view the program segment, download the program segment, and/or share the program segment with other users of a community group.

Although the user may be able to identify a program segment of interest, he or she may not have recorded it. This presents a problem to the user in trying to seek out and determine the location and the availability of the selected program segment. For example, although the program segment may not be available on local storage (e.g. digital video recorder) associated with the user's user equipment or user equipment device, it may be available on the Internet (e.g. somewhere within the program broadcaster's website) or it may be available on the local storage of another user's user equipment (e.g., another user in a community group of which the first user is a member).

The task of determining a potential location of the program segment and whether the program segment is available at the location may be onerous for the user. For example, although the user may be able to determine a potential location for the program segment on the Internet (e.g. the broadcaster's website), the program segment may not yet be available. This would mean that to acquire the program segment of interest the user would have to continuously access the Internet to determine whether the program segment is available. This task may require an extraordinary amount of effort for the user, leading to a loss of interest in the program segment or loss of utility for the program segment. As another example, even if the user is able to locate the program associated with the program segment, he or she may find the task of determining the location of the program segment, within the program, to be difficult and time consuming.

In addition, the increase in availability of resources on a user's equipment has allowed a user to have access to an ever increasing amount of broadcast programs (e.g., via cable networks, satellite providers, or the Internet) as well as stored programs (e.g., stored on a digital video recorder), which has led to a problem for the user in seeking out and being able to view or download, for later viewing, particular programs or even segments of programs in which they may have an interest. Meanwhile, another user, interested in the same programs or program segments, may have found such a program. If the two users are members of the same community group, they may not be able to share the experience of viewing, for example, a program segment that is of interest to both users.

Accordingly it would be desirable to have methods and systems that allow a user to automatically determine the location and availability of a program segment of interest and then to view, download, and/or notify other potentially interested users in a community group about the program segment.

WO 2009/016544 A2 is about a method and apparatus for providing information about video content to a client. It describes an internet-based service, which allows users to search for and locate video content of interest. The service provides personalized search results based on the user's geographic location and the time/date of the search. It includes features such as embedding up-to-date information about video content into third-party web pages, ranking websites based on user interactions, and offering detailed metadata about video content sourced from various providers. It focuses on enabling users to find video content available through different platforms, such as broadcast TV, video-on-demand services, internet downloads, and DVDs. It also provides tools for embedding search results into blogs, social networking profiles, and other web pages, ensuring the information remains relevant and updated based on the viewer's location and preferences.

US 6 996 627 B1 is about a system and method for updating program information items via a network. It addresses the challenges of distributing information from a media server to client computers while minimizing network congestion. The invention includes mechanisms for dynamically adjusting the polling frequency of client computers, delivering custom media content, and maintaining up-to-date program information.

### Summary of the Invention

According to an aspect, there is provided a method according to claim 1 and/or a system according to claim 9. A computer program according to claim 8 may also be provided.

In view of the foregoing, methods and systems that allow a user to automatically determine the location and availability of a program segment of interest and then to view, download, and/or notify other potentially interested users in a community group about the program segment are provided.

Embodiments may be provided that allow a user to select a program segment of interest and to automatically determine the location and availability of the selected program segment. The program segment may be shared with potentially interested users in a selected community group. The users within the selected community group may be notified of the availability of the selected program segment. The interested users may be able to view and/or download the selected program segment from the location where the program segment if found. For example, a user may identify a ten minute program segment at the beginning of the talk show of interest to the user as well as a community group with which the user would like to share the ten minute program segment using his or her user equipment. The ten minute program segment may not be available on the user's local storage (e.g. digital video recorded) and it may not yet be available on the Internet (e.g. on the program broadcaster's website). In this case, the user equipment may automatically determine the location of the ten minute program segment as well as when this program segment becomes available. When the location of the ten minute program segment is determined and when it is available, the user equipment may allow users of the selected community group to view and/or download the selected ten minute program segment.

A program segment of interest and a community group with which to share the program segment of interest may each be selected by a user. Checks may be performed to determine if the program segment is already available to the selected community group, available on the local storage connected to the user's user equipment or user equipment device, or available on the website associated with the broadcaster of the program segment. If the program segment is not available, the website associated with the broadcaster of the program segment may be periodically polled for program segment until it becomes available. If the program segment is found to be available, a reference to the program segment may be shared with users in the selected community group. The shared reference may be used to generate a notification of the availability of the program segment for the other users in the selected community group. The notification may allow the other users to view and/or download the selected program segment.

Notifying other users in a community group about program segments of interest in this way may advantageously reduce the problem of seeking out and being able to view or download particular program segments of interest for all of the users of the community group. In addition, notifying other users in a community group about program segments of interest in this way may advantageously allow multiple users with common interests to share a common experience of viewing the same program segment.

In some embodiments, a user selection of a program segment of interest may be received using user equipment. A network may be periodically polled for the location and availability of the program segment, using the user equipment. A reference associated with the location of the program segment on the network may be created. The reference may be shared with a community of interested users, using the user equipment. The community of interested users may be notified about the program segment using the reference.

In other embodiments, a user equipment is configured to receive a user selection of a program segment of interest, poll a network for the location and availability of the program segment, create a reference associated with the location of the program segment on the network, share the reference with a community of interested users, and notify the community of interested users about the program segment using the reference.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 shows an illustrative grid program listing display arranged by time and channel that also enables access to different types of media content in a single display;
FIG. 2 shows an illustrative display arrangement for providing media guidance;
FIG. 3 shows an illustrative user equipment device;
FIG. 4 shows a diagram of an illustrative interactive media;
FIG. 5 shows an illustrative system with network interconnections between user equipment or user equipment devices associated with users of a community group;
FIG. 6 shows an illustration of a number of different community groups of users with interests in a variety of program segments;
FIG. 7A shows an illustration of a selection of the start of a program segment of interest by a user while viewing a program;
FIG. 7B shows an illustration of a selection of the end of a program segment of interest by a user while viewing a program;
FIG. 8A shows an illustrative menu, which may be used to notify other users in a community group about a program segment of interest
FIG. 8B shows an illustrative menu, which may be used to name a program segment of interest and then to notify other users in a community group about the program segment of interest;
FIG. 9A shows an illustrative menu which may enable users to view community groups of which they are a member, view program segment listings for these community groups, share program segments with these community groups, or leave a particular community group;
FIG. 9B shows a reference to a program segment which may be shared with users within or outside of a community group;
FIG. 10 shows an illustrative flowchart of a process which may be used by a user to notify users within various community groups about a program segment of interest;
FIG. 11 shows an illustrative flowchart of a process which may be used to allow a user to setup automatic polling of a broadcaster's website when a selected program segment of interest is currently unavailable on the website;
FIG. 12 shows an illustrative flowchart of a process which may be used to allow a user to setup automatic polling of a broadcaster's website when a selected program segment of interest is currently unavailable on the website;
FIG. 13A shows an illustrative flowchart of a process which may be used for detecting the availability of a selected program segment on the program broadcaster's website;
FIG. 13B shows an illustrative flowchart of a process which may be used for detecting the availability of a selected program segment on local storage attached to the user equipment or device (e.g. a Digital Video Recorder);
FIG. 14 shows an illustrative flowchart of a process that may be used to receive a reference to a program segment sent from one user equipment of a user in a community group to a receiving user equipment of a another user in the community group.
FIG. 15A shows an illustrative flowchart of a process that may be used to view a program segment of interest which a user has been notified about;
FIG. 15B shows an illustrative flowchart of a process that may be used to download a program segment of interest which a user has been notified about;
FIG. 16 shows an illustration of a notification received by a user to indicate the availability of a new program segment in a community group.

### Detailed Description of Embodiments

The amount of media available to users in any given media delivery system can be substantial. Consequently, many users desire a form of media guidance through an interface that allows users to efficiently navigate media selections and easily identify media that they may desire. An application which provides such guidance is referred to herein as an interactive media guidance application or, sometimes, a media guidance application or a guidance application.

Interactive media guidance applications may take various forms depending on the media for which they provide guidance. One typical type of media guidance application is an interactive television program guide. Interactive television program guides (sometimes referred to as electronic program guides) are well-known guidance applications that, among other things, allow users to navigate among and locate many types of media content including conventional television programming (provided via traditional broadcast, cable, satellite, Internet, or other means), as well as pay-per-view programs, on-demand programs (as in video-on-demand (VOD) systems), Internet content (e.g., streaming media, downloadable media, Webcasts, etc.), and other types of media or video content. Guidance applications also allow users to navigate among and locate content related to the video content including, for example, video clips, program segments, articles, advertisements, chat sessions, games, etc.

With the advent of the Internet, mobile computing, and high-speed wireless networks, users are accessing media on personal computers (PCs) and other devices on which they traditionally did not, such as hand-held computers, personal digital assistants (PDAs), mobile telephones, or other mobile devices. On these devices users are able to navigate among and locate the same media available through a television. Consequently, media guidance is necessary on these devices, as well. The guidance provided may be for media content available only through a television, for media content available only through one or more of these devices, or for media content available both through a television and one or more of these devices. The media guidance applications may be provided as online applications (i.e., provided on a web-site), or as stand-alone applications or clients on hand-held computers, PDAs, mobile telephones, or other mobile devices. The various devices and platforms that may implement media guidance applications are described in more detail below.

The increased use and availability of interactive program guide and media guidance resources on user equipment or user equipment devices, the interconnections of multiple users' equipment to each other using communications network resources, and media storage resources have all allowed users to have access to multiple types of media services. These media services are now readily accessible to a user through their user equipment or user equipment devices. Virtual community groups of users, interested in particular types of media, for example, can now be formed via user equipment. Users can now communicate information to one another using their user equipment. As another example, a user can remotely access the stored media content on their user equipment. A user may be able to set reminders on their user equipment to view or record a program available in the future. Virtual groups of user equipment and remote access to stored media content are described in greater detail in Ellis et al., U.S. Patent Application No. 11/317,911 (Attorney Docket No. UV-350A), filed December 23, 2005, which is hereby incorporated by reference herein in its entirety. The ability to set reminders to view or record a program available in the future is discussed in greater detain in Baumgartner, U.S. Patent Application Publication No. 2005/0160458 (Attorney Docket No. UV-267), filed January 21, 2004, which is hereby incorporated by reference herein in its entirety.

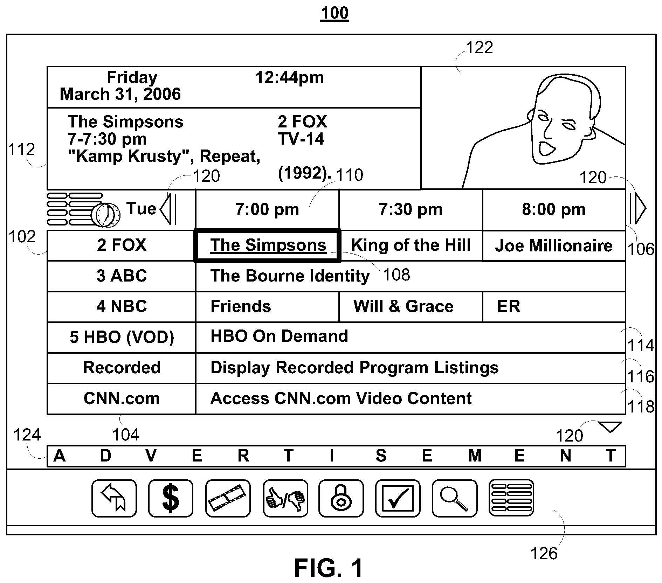

One of the functions of the media guidance application is to provide media listings and media information to users. FIGS. 1-2 show illustrative display screens that may be used to provide media guidance, and in particular media listings. The display screens shown in FIGS. 1-2 and 7A, 7B, 8A, 8B, 9, and 17 may be implemented on any suitable device or platform. While the displays of FIGS. 1-2 and 7A, 7B, 8A, 8B, 9, and 17 are illustrated as full screen displays, they may also be fully or partially overlaid over media content being displayed. A user may indicate a desire to access media information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media information organized in one of several ways, such as by time and channel in a grid, by time, by channel, by media type, by category (e.g., movies, sports, news, children, or other categories of programming), or other predefined, user-defined, or other organization criteria.

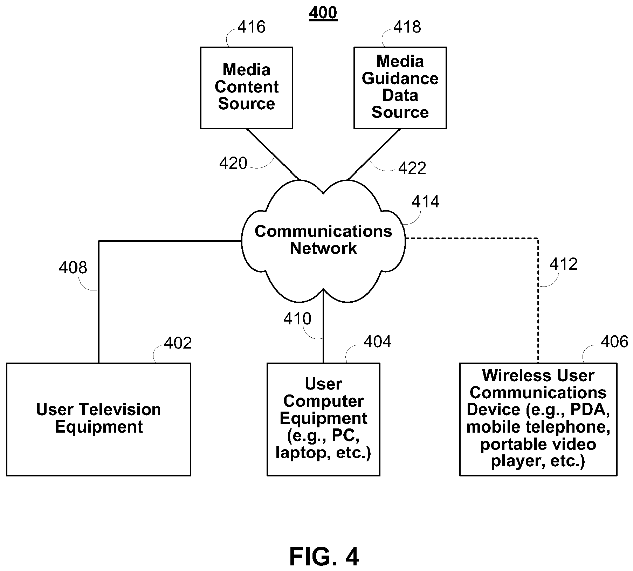

Processes 1000, 1100, 1200, 1300, 1310, 1400, 1500, and 1510, which will be described below, may be executed using media guidance applications or any suitable applications described herein. These processes may be executed on any of the devices described with respect to system 400 of FIG. 4. For example, these processes may be executed by one or multiple pieces of user equipment, one or multiple user equipment devices, or any other processing devices remote or local to a user.

FIG. 1 shows illustrative grid program listings display 100 arranged by time and channel that also enables access to different types of media content in a single display. Display 100 may include grid 102 with: (1) a column of channel/media type identifiers 104, where each channel/media type identifier (which is a cell in the column) identifies a different channel or media type available; and (2) a row of time identifiers 106, where each time identifier (which is a cell in the row) identifies a time block of programming. Grid 102 also may include cells of program listings, such as program listing 108, where each listing provides the title of the program provided on the listing's associated channel and time. With a user input device, a user can select program listings by moving highlight region 110. Information relating to the program listing selected by highlight region 110 may be provided in program information region 112. Region 112 may include, for example, the program title, the program description, the time the program is provided (if applicable), the channel the program is on (if applicable), the program's rating, and other desired information.

In addition to providing access to linear programming provided according to a schedule, the media guidance application also provides access to non-linear programming which is not provided according to a schedule. Non-linear programming may include content from different media sources including on-demand media content (e.g., VOD), Internet content (e.g., streaming media, downloadable media, etc.), locally stored media content (e.g., video content stored on a digital video recorder (DVR), digital video disc (DVD), video cassette, compact disc (CD), etc.), or other time-insensitive media content. On-demand content may include both movies and original media content provided by a particular media provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming media or downloadable media through an Internet web site or other Internet access (e.g. FTP).

Grid 102 may provide listings for non-linear programming including on-demand listing 114, recorded media listing 116, and Internet content listing 118. A display combining listings for content from different types of media sources is sometimes referred to as a "mixed-media" display. The various permutations of the types of listings that may be displayed that are different than display 100 may be based on user selection or guidance application definition (e.g., a display of only recorded and broadcast listings, only on-demand and broadcast listings, etc.). As illustrated, listings 114, 116, and 118 are shown as spanning the entire time block displayed in grid 102 to indicate that selection of these listings may provide access to a display dedicated to on-demand listings, recorded listings, or Internet listings, respectively. In other embodiments, listings for these media types may be included directly in grid 102. Additional listings may be displayed in response to the user selecting one of the navigational icons 120. (Pressing an arrow key on a user input device may affect the display in a similar manner as selecting navigational icons 120.)

Display 100 may also include video region 122, advertisement 124, and options region 126. Video region 122 may allow the user to view and/or preview programs that are currently available, will be available, or were available to the user. The content of video region 122 may correspond to, or be independent from, one of the listings displayed in grid 102. Grid displays including a video region are sometimes referred to as picture-in-guide (PIG) displays. PIG displays and their functionalities are described in greater detail in Satterfield et al. U.S.

Patent No. 6,564,378 (Attorney Docket No. UV-045), issued May 13, 2003 and Yuen et al. U.S. Patent No. 6,239,794 (Attorney Docket No. GS-061), issued May 29, 2001, which are hereby incorporated by reference herein in their entireties. PIG displays may be included in other media guidance application display screens of the present invention.

Advertisement 124 may provide an advertisement for media content that, depending on a viewer's access rights (e.g., for subscription programming), is currently available for viewing, will be available for viewing in the future, or may never become available for viewing, and may correspond to or be unrelated to one or more of the media listings in grid 102. Advertisement 124 may also be for products or services related or unrelated to the media content displayed in grid 102. Advertisement 124 may be selectable and provide further information about media content, provide information about a product or a service, enable purchasing of media content, a product, or a service, provide media content relating to the advertisement, etc. Advertisement 124 may be targeted based on a user's profile/preferences, monitored user activity, the type of display provided, or on other suitable targeted advertisement bases.

While advertisement 124 is shown as rectangular or banner shaped, advertisements may be provided in any suitable size, shape, and location in a guidance application display. For example, advertisement 124 may be provided as a rectangular shape that is horizontally adjacent to grid 102. This is sometimes referred to as a panel advertisement. In addition, advertisements may be overlaid over media content or a guidance application display or embedded within a display. Advertisements may also include text, images, rotating images, video clips, program segments, or other types of media content. Advertisements may be stored in the user equipment with the guidance application, in a database connected to the user equipment, in a remote location (including streaming media servers), or on other storage means or a combination of these locations. Providing advertisements in a media guidance application is discussed in greater detail in, for example, Knudson et al., U.S. Patent Application No. 10/347,673 (Attorney Docket No. UV-042 Cont.), filed January 17, 2003, Ward, III et al. U.S. Patent No. 6,756,997 (Attorney Docket No. IS-074 Cont. 2), issued June 29, 2004, and Schein et al. U.S. Patent No. 6,388,714 (Attorney Docket No. ST-026), issued May 14, 2002, which are hereby incorporated by reference herein in their entireties. It will be appreciated that advertisements may be included in other media guidance application display screens of the present invention.

Options region 126 may allow the user to access different types of media content, media guidance application displays, and/or media guidance application features. Options region 126 may be part of display 100 (and other display screens of the present invention), or may be invoked by a user by selecting an on-screen option or pressing a dedicated or assignable button on a user input device. The selectable options within options region 126 may concern features related to program listings in grid 102 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, access to various types of listing displays, subscribe to a premium service, edit a user's profile, access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of media content listings displayed (e.g., only HDTV programming, user-specified broadcast channels based on favorite channel selections, reordering the display of channels, recommended media content, etc.), desired recording features (e.g., recording or series recordings for particular users, recording quality, etc.), parental control settings, and other desired customizations.

The media guidance application may allow a user to provide user profile information or may automatically compile user profile information. The media guidance application may, for example, monitor the media the user accesses and/or other interactions the user may have with the guidance application. Additionally, the media guidance application may obtain all or part of other user profiles that are related to a particular user (e.g., from other web sites on the Internet the user accesses, such as www.tvguide.com, from other media guidance applications the user accesses, from other interactive applications the user accesses, from a handheld device of the user, etc.), and/or obtain information about the user from other sources that the media guidance application may access. As a result, a user can be provided with a unified guidance application experience across the user's different devices. This type of user experience is described in greater detail below in connection with FIG. 4. Additional personalized media guidance application features are described in greater detail in Ellis et al., U.S. Patent Application No. 11/179,410 (Attorney Docket No. UV-073), filed July 11, 2005, Boyer et al., U.S. Patent Application No. 09/437,304 (Attorney Docket No. UV-112), filed November 9, 1999, and Ellis et al., U.S. Patent Application No. 10/105,128 (Attorney Docket No. UV-240), filed February 21, 2002, which are hereby incorporated by reference herein in their entireties.

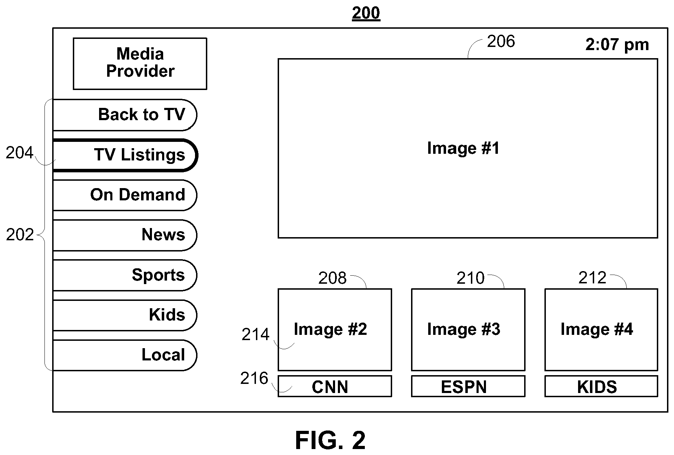

Another display arrangement for providing media guidance is shown in FIG. 2. Video mosaic display 200 may include selectable options 202 for media content information organized based on media type, genre, and/or other organization criteria. In display 200, television listings option 204 is selected, thus providing listings 206, 208, 210, and 212 as broadcast program listings. Unlike the listings from FIG. 1, the listings in display 200 are not limited to simple text (e.g., the program title) and icons to describe media. Rather, in display 200 the listings may provide graphical images including cover art, still images from the media content, video clip previews, live video from the media content, or other types of media that indicate to a user the media content being described by the listing. Each of the graphical listings may also be accompanied by text to provide further information about the media content associated with the listing. For example, listing 208 may include more than one portion, including media portion 214 and text portion 216. Media portion 214 and/or text portion 216 may be selectable to view video in full-screen or to view program listings related to the video displayed in media portion 214 (e.g., to view listings for the channel that the video is displayed on).

The listings in display 200 are of different sizes (i.e., listing 206 is larger than listings 208, 210, and 212), but if desired, all the listings may be the same size. Listings may be of different sizes or graphically accentuated to indicate degrees of interest to the user or to emphasize certain content, as desired by the media provider or based on user preferences. Various systems and methods for graphically accentuating media listings are discussed in, for example, Yates, U.S. Patent Application No. 11/324,202 (Attorney Docket No. UV-402), filed December 29, 2005, which is hereby incorporated by reference herein in its entirety.

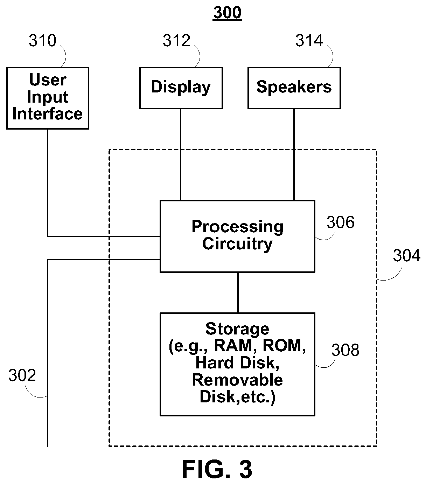

Users may access media content and the media guidance application (and its display screens described above and below) from one or more of their user equipment devices. FIG. 3 shows a generalized embodiment of illustrative user equipment device 300. More specific implementations of user equipment devices are discussed below in connection with FIG. 4. User equipment device 300 may receive media content and data via input/output (hereinafter "I/O") path 302. I/O path 302 may provide media content (e.g., broadcast programming, on-demand programming, Internet content, and other video or audio) and data to control circuitry 304, which may include processing circuitry 306 and storage 308. Control circuitry 304 may be used to send and receive commands, requests, and other suitable data using I/O path 302. I/O path 302 may connect control circuitry 304 (and specifically processing circuitry 306) to one or more communications paths (described below). I/O functions may be provided by one or more of these communications paths, but are shown as a single path in FIG. 3 to avoid overcomplicating the drawing.

Control circuitry 304 may be based on any suitable processing circuitry 306 such as processing circuitry based on one or more microprocessors, microcontrollers, digital signal processors, programmable logic devices, etc. In some embodiments, control circuitry 304 executes instructions for a media guidance application or any other applications stored in memory (i.e., storage 308). In client-server based embodiments, control circuitry 304 may include communications circuitry suitable for communicating with a guidance application server or other networks or servers. Communications circuitry may include a cable modem, an integrated services digital network (ISDN) modem, a digital subscriber line (DSL) modem, a telephone modem, or a wireless modem for communications with other equipment. Such communications may involve the Internet or any other suitable communications networks or paths (which is described in more detail in connection with FIG. 4). In addition, communications circuitry may include circuitry that enables peer-to-peer communication of user equipment devices, or communication of user equipment devices in locations remote from each other (described in more detail below).

Memory (e.g., random-access memory, read-only memory, or any other suitable memory), hard drives, optical drives, or any other suitable fixed or removable storage devices (e.g., DVD recorder, CD recorder, video cassette recorder, or other suitable recording device) may be provided as storage 308 that is part of control circuitry 304. Storage 308 may include one or more of the above types of storage devices. For example, user equipment device 300 may include a hard drive for a DVR (sometimes called a personal video recorder, or PVR) and a DVD recorder as a secondary storage device. Storage 308 may be used to store various types of media described herein and guidance application data, including program information, guidance application settings, user preferences or profile information, or other data used in operating the guidance application. Nonvolatile memory may also be used (e.g., to launch a boot-up routine and other instructions).

Control circuitry 304 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 304 may also include scaler circuitry for upconverting and downconverting media into the preferred output format of the user equipment 300. Circuitry 304 may also include digital-to-analog converter circuitry and analog-to-digital converter circuitry for converting between digital and analog signals. The tuning and encoding circuitry may be used by the user equipment to receive and to display, to play, or to record media content. The tuning and encoding circuitry may also be used to receive guidance data. The circuitry described herein, including for example, the tuning, video generating, encoding, decoding, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 308 is provided as a separate device from user equipment 300, the tuning and encoding circuitry (including multiple tuners) may be associated with storage 308.

A user may control the control circuitry 304 using user input interface 310. User input interface 310 may be any suitable user interface, such as a remote control, mouse, trackball, keypad, keyboard, touch screen, touch pad, stylus input, joystick, voice recognition interface, or other user input interfaces. Display 312 may be provided as a stand-alone device or integrated with other elements of user equipment device 300. Display 312 may be one or more of a monitor, a television, a liquid crystal display (LCD) for a mobile device, or any other suitable equipment for displaying visual images. In some embodiments, display 312 may be HDTV-capable. Speakers 314 may be provided as integrated with other elements of user equipment device 300 or may be stand-alone units. The audio component of videos and other media content displayed on display 312 may be played through speakers 314. In some embodiments, the audio may be distributed to a receiver (not shown), which processes and outputs the audio via speakers 314.

The guidance application may be implemented using any suitable architecture. For example, it may be a stand-alone application wholly implemented on user equipment device 300. In such an approach, instructions of the application are stored locally, and data for use by the application is downloaded on a periodic basis (e.g., from the VBI of a television channel, from an out-of-band feed, or using another suitable approach). In another embodiment, the media guidance application is a client-server based application. Data for use by a thick or thin client implemented on user equipment device 300 is retrieved on-demand by issuing requests to a server remote to the user equipment device 300. In one example of a client-server based guidance application, control circuitry 304 runs a web browser that interprets web pages provided by a remote server.

In yet other embodiments, the media guidance application is downloaded and interpreted or otherwise run by an interpreter or virtual machine (run by control circuitry 304). In some embodiments, the guidance application may be encoded in the ETV Binary Interchange Format (EBIF), received by control circuitry 304 as part of a suitable feed, and interpreted by a user agent running on control circuitry 304. For example, the guidance application may be a EBIF widget. In other embodiments, the guidance application may be defined by a series of JAVA-based files that are received and run by a local virtual machine or other suitable middleware executed by control circuitry 304. In some of such embodiments (e.g., those employing MPEG-2 or other digital media encoding schemes), the guidance application may be, for example, encoded and transmitted in an MPEG-2 object carousel with the MPEG audio and video packets of a program.

User equipment device 300 of FIG. 3 can be implemented in system 400 of FIG. 4 as user television equipment 402, user computer equipment 404, wireless user communications device 406, or any other type of user equipment suitable for accessing media, such as a non-portable gaming machine. For simplicity, these devices may be referred to herein collectively as user equipment or user equipment devices. User equipment devices, on which a media guidance application is implemented, may function as a standalone device or may be part of a network of devices. Various network configurations of devices may be implemented and are discussed in more detail below.

User television equipment 402 may include a set-top box, an integrated receiver decoder (IRD) for handling satellite television, a television set, a digital storage device, a DVD recorder, a video-cassette recorder (VCR), a local media server, or other user television equipment. One or more of these devices may be integrated to be a single device, if desired. User computer equipment 404 may include a PC, a laptop, a tablet, a WebTV box, a personal computer television (PC/TV), a PC media server, a PC media center, or other user computer equipment. WEBTV is a trademark owned by Microsoft Corp. Wireless user communications device 406 may include PDAs, a mobile telephone, a portable video player, a portable music player, a portable gaming machine, or other wireless devices.

It should be noted that with the advent of television tuner cards for PC's, WebTV, and the integration of video into other user equipment devices, the lines have become blurred when trying to classify a device as one of the above devices. In fact, each of user television equipment 402, user computer equipment 404, and wireless user communications device 406 may utilize at least some of the system features described above in connection with FIG. 3 and, as a result, include flexibility with respect to the type of media content available on the device. For example, user television equipment 402 may be Internet-enabled allowing for access to Internet content, while user computer equipment 404 may include a tuner allowing for access to television programming. The media guidance application may also have the same layout on the various different types of user equipment or may be tailored to the display capabilities of the user equipment. For example, on user computer equipment, the guidance application may be provided as a web site accessed by a web browser. In another example, the guidance application may be scaled down for wireless user communications devices.

In system 400, there is typically more than one of each type of user equipment device but only one of each is shown in FIG. 4 to avoid overcomplicating the drawing. In addition, each user may utilize more than one type of user equipment device (e.g., a user may have a television set and a computer) and also more than one of each type of user equipment device (e.g., a user may have a PDA and a mobile telephone and/or multiple television sets).

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.tvguide.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 414. Namely, user television equipment 402, user computer equipment 404, and wireless user communications device 406 are coupled to communications network 414 via communications paths 408, 410, and 412, respectively. Communications network 414 may be one or more networks including the Internet, a mobile phone network, mobile device (e.g., Blackberry) network, cable network, public switched telephone network, or other types of communications network or combinations of communications networks. BLACKBERRY is a service mark owned by Research In Motion Limited Corp. Paths 408, 410, and 412 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 412 is drawn with dotted lines to indicate that in the exemplary embodiment shown in FIG. 4 it is a wireless path and paths 408 and 410 are drawn as solid lines to indicate they are wired paths (although these paths may be wireless paths, if desired). Communications with the user equipment devices may be provided by one or more of these communications paths, but are shown as a single path in FIG. 4 to avoid overcomplicating the drawing.

Although communications paths are not drawn between user equipment devices, these devices may communicate directly with each other via communication paths, such as those described above in connection with paths 408, 410, and 412, as well other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 414.

System 400 may include media content source 416 and media guidance data source 418 coupled to communications network 414 via communication paths 420 and 422, respectively. Paths 420 and 422 may include any of the communication paths described above in connection with paths 408, 410, and 412. Communications with the media content source 416 and media guidance data source 418 may be exchanged over one or more communications paths, but are shown as a single path in FIG. 4 to avoid overcomplicating the drawing. In addition, there may be more than one of each of media content source 416 and media guidance data source 418, but only one of each is shown in FIG. 4 to avoid overcomplicating the drawing. (The different types of each of these sources are discussed below.) If desired, media content source 416 and media guidance data source 418 may be integrated as one source device. Although communications between sources 416 and 418 with user equipment devices 402, 404, and 406 are shown as through communications network 414, in some embodiments, sources 416 and 418 may communicate directly with user equipment devices 402, 404, and 406 via communication paths (not shown) such as those described above in connection with paths 408, 410, and 412.

Media content source 416 may include one or more types of media distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other media content providers. NBC is a trademark owned by the National Broadcasting Company, Inc., ABC is a trademark owned by the ABC, INC., and HBO is a trademark owned by the Home Box Office, Inc. Media content source 416 may be the originator of media content (e.g., a television broadcaster, a Webcast provider, etc.) or may not be the originator of media content (e.g., an on-demand media content provider, an Internet provider of video content of broadcast programs for downloading, etc.). Media content source 416 may include cable sources, satellite providers, on-demand providers, Internet providers, or other providers of media content. Media content source 416 may also include a remote media server used to store different types of media content (including video content selected by a user), in a location remote from any of the user equipment devices. As used herein, the term broadcaster may refer to an analog or digital signal provider, a cable network, a satellite provider, an Internet website, an Internet content provider, or any such provider that may distribute content such as programs or program segments to user equipment or user equipment devices. As used herein, the terms broadcaster's website or program broadcaster's website may refer to one or many web addresses, server addresses, databases, or other sources of program information or program content, specific to a particular broadcaster, and associated with Internet websites or other content providers. Systems and methods for remote storage of media content, and providing remotely stored media content to user equipment are discussed in greater detail in connection with Ellis et al., U.S. Patent Application No. 09/332,244 (Attorney Docket No. UV-084), filed June 11, 1999, which is hereby incorporated by reference herein in its entirety.

Media guidance data source 418 may provide media guidance data, such as media listings, media-related information (e.g., broadcast times, broadcast channels, media titles, media descriptions, ratings information (e.g., parental control ratings, critic's ratings, etc.), genre or category information, actor information, logo data for broadcasters' or providers' logos, etc.), media format (e.g., standard definition, high definition, etc.), advertisement information (e.g., text, images, media clips or segments, etc.), on-demand information, and any other type of guidance data that is helpful for a user to navigate among and locate desired media selections.

Media guidance application data may be provided to the user equipment devices using any suitable approach. In some embodiments, the guidance application may be a stand-alone interactive television program guide that receives program guide data via a data feed (e.g., a continuous feed, trickle feed, or data in the vertical blanking interval of a channel). Program schedule data and other guidance data may be provided to the user equipment on a television channel sideband, in the vertical blanking interval of a television channel, using an in-band digital signal, using an out-of-band digital signal, or by any other suitable data transmission technique. Program schedule data and other guidance data may be provided to user equipment on multiple analog or digital television channels. Program schedule data and other guidance data may be provided to the user equipment with any suitable frequency (e.g., continuously, daily, a user-specified period of time, a system-specified period of time, in response to a request from user equipment, etc.). In some approaches, guidance data from media guidance data source 418 may be provided to users' equipment using a client-server approach. For example, a guidance application client residing on the user's equipment may initiate sessions with source 418 to obtain guidance data when needed. Media guidance data source 418 may provide user equipment devices 402, 404, and 406 the media guidance application itself or software updates for the media guidance application.

Media guidance applications may be, for example, stand-alone applications implemented on user equipment devices. In other embodiments, media guidance applications may be client-server applications where only the client resides on the user equipment device. For example, media guidance applications may be implemented partially as a client application on control circuitry 304 of user equipment device 300 and partially on a remote server as a server application (e.g., media guidance data source 418). The guidance application displays may be generated by the media guidance data source 418 and transmitted to the user equipment devices. The media guidance data source 418 may also transmit data for storage on the user equipment, which then generates the guidance application displays based on instructions processed by control circuitry.

Media guidance system 400 is intended to illustrate a number of approaches, or network configurations, by which user equipment devices and sources of media content and guidance data may communicate with each other for the purpose of accessing media and providing media guidance. The present invention may be applied in any one or a subset of these approaches, or in a system employing other approaches for delivering media and providing media guidance. The following three approaches provide specific illustrations of the generalized example of FIG. 4.

In one approach, user equipment devices may communicate with each other within a home network. User equipment devices can communicate with each other directly via short-range point-to-point communication schemes describe above, via indirect paths through a hub or other similar device provided on a home network, or via communications network 414. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Application No. 11/179,410 (Attorney Docket No. UV-073), filed July 11, 2005. Different types of user equipment devices in a home network may also communicate with each other to transmit media content. For example, a user may transmit media content from user computer equipment to a portable video player or portable music player.

In a second approach, users may have multiple types of user equipment by which they access media content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent Application No. 10/927,814 (Attorney Docket No. UV-099 Cont. 5), filed August 26, 2004, which is hereby incorporated by reference herein in its entirety.

In a third approach, users of user equipment devices inside and outside a home can use their media guidance application to communicate directly with media content source 416 to access media content. Specifically, within a home, users of user television equipment 404 and user computer equipment 406 may access the media guidance application to navigate among and locate desirable media content. Users may also access the media guidance application outside of the home using wireless user communications devices 406 to navigate among and locate desirable media content.

It will be appreciated that while the discussion of media content has focused on video content, the principles of media guidance can be applied to other types of media content, such as music, images, etc.

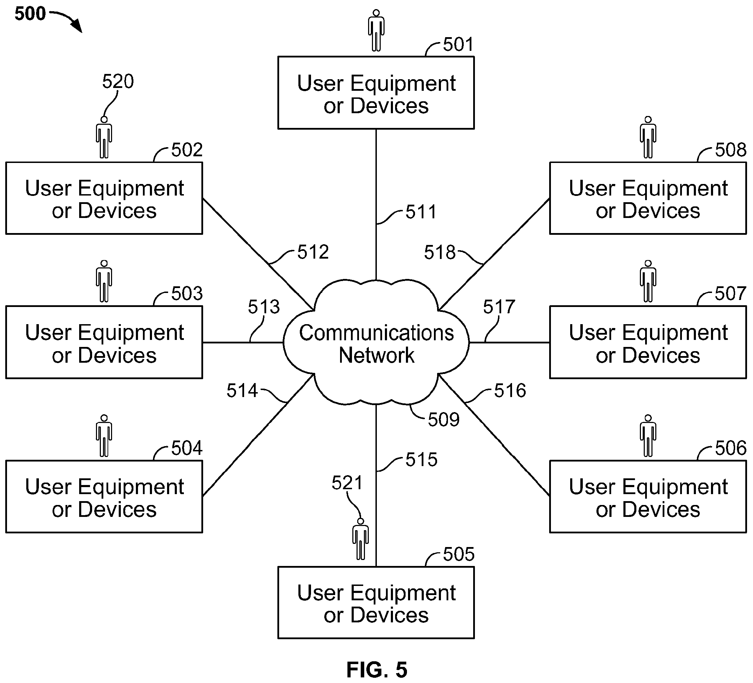

FIG. 5 shows illustrative system 500 with network interconnections between user equipment or user equipment devices associated with users of a community group. Communications network 509 may be one or more networks including the Internet, a mobile phone network, mobile device (e.g., Blackberry) network, cable network, public switched telephone network, or other types of communications network or combinations of communications networks. BLACKBERRY is a service mark owned by Research In Motion Limited Corp. Communications network 509 may be substantially similar to communications network 414 of FIG. 4. Paths 511, 512, 513, 514, 515, 516, 517,and 518 may include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths.

Communications network 509 is used to support the interconnection of any number of user equipment or devices. For example, user equipment or user equipment devices 501, 502, 503, 504, 505, 506, 507, and 508 are each connected to communications network 509. These user equipment or user equipment devices may be substantially similar to user television equipment 402 of FIG. 4, user computer equipment 404 of FIG. 4, and/or wireless communications device 406 of FIG. 4. These interconnections facilitate communications between a community group of users associated with the user equipment or devices. Each of these users may be associated with different providers and located across many different geographic locations.

The user equipment or user equipment devices associated with each user may include a set-top box, an integrated receiver decoder (IRD) for handling satellite television, a television set, a digital storage device, a DVD recorder, a video-cassette recorder (VCR), a local media server, a PC, a laptop, a tablet, a WebTV box, a personal computer television (PC/TV), a PC media server, a PC media center, PDAs, a mobile telephone, a portable video player, a portable music player, a portable gaming machine or other user television equipment, user computer equipment, or other wireless devices. One or more of these devices may be integrated to be a single device, if desired. WEBTV is a trademark owned by Microsoft Corp. The capabilities of the user equipment or user equipment devices are as described above. Users may control in-home devices via a media guidance application implemented on a remote device.

Each of the user equipment or user equipment devices (e.g. user equipment or user devices 501, 502, 503, 504, 505, 506, 507, and 508) may implement a media guidance application as described above. In addition, interactive applications such as home shopping applications, home banking applications, game applications, and other applications (e.g., applications related to e-mail and chat or other communications functions, etc.) may be provided as separate applications that are accessed through a navigation shell application (i.e., a menu application with menu options corresponding to the applications). In some embodiments, control circuitry 304 of FIG. 3 may execute instructions for the media guidance application or other interactive applications stored in the memory of user equipment or user equipment devices.

The features of such applications may be combined. For example, games, video-on-demand services, home shopping services, network-based video recorder functions, digital video recorder functions, navigational functions, program guide functions, communications functions, and other suitable functions may be provided using one application or any other suitable number of applications. The one or more applications may display various overlays on user equipment including, for example, interactive television information on top of video for a given television channel.

Interactive television program guide applications, home banking applications, home shopping applications, network-based video recorder and digital video recorder applications, video-on-demand applications, gaming applications, communications applications, and navigational applications are only a few illustrative examples of the types of interactive media guidance and other applications that may be supported by system 500. Other suitable interactive applications that may be supported include news services, web browsing and other Internet services, and interactive wagering services (e.g., for wagering on horse races, sporting events, and the like).

Each user may have multiple types of user equipment or user equipment devices by which they may communicate, access, and/or share multiple types of media or references to media. For example, using communications network 509 and their associated user equipment or user equipment devices, users such as user 520 and user 521, may be able to select program segments of interest and to notify users of community groups of which they are a part about the availability of the programs or segments for subsequent viewing or download. In accordance with the present invention, the ability for a user to select program segments of interest and notify other users about the availability of the program segments may be implemented as an interactive application on a user equipment or a user equipment device.

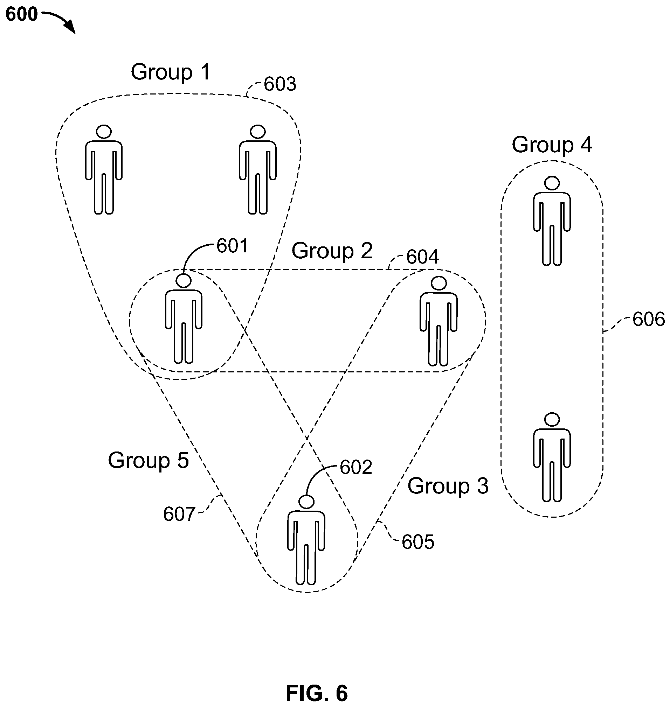

FIG. 6 shows illustration 600 of a number of different community groups of users with interests in a variety of program segments. Illustration 600 shows virtual group interconnections between users. The dotted lines around users in illustration 600 represent community group 603, 604, 605, 606, and 607. Each of these community groups may be interested in specific types of program segments. For example, community group 603 may be interested in program segments showing drama highlights (e.g., great monologues), community group 604 may be interested in program segments showing sports highlights (e.g., Eli Manning highlights), and community group 607 may be interested in program segments of show-related highlights (e.g., highlights of the show American Outdoorsman).

Each community group may include as members any number of users. These users may have the capability to communicate with each other using their associated user equipment or user equipment devices which are connected to communications network 509 of FIG. 5. For example, community group 607 may include user 601 and user 602. User 601 and user 602 may be interested in program segments of the show American Outdoorsman. As shown in illustration 600, each user may be a member of multiple community groups. For example, user 601 is simultaneously a member of community group 603, community group 604, and community group 607.

Each user may join any community group which is available to the public or any community group that is privately available to the user. Likewise, each user may leave a community group of which he or she is a member. Each user may also create any number of community groups of interest and also invite other users to join the created community group. Similarly, each user may delete community groups which he or she created and of which he or she is the sole member. The features with regards to community groups, as described above, may be implemented in, for example, a separate interactive application or as a part of any application or set of applications as already described. The organization and interconnection of community groups, the communication between user equipment or user equipment devices associated with users within groups, and the association of particular users with any number of groups may likewise be managed by a separate interactive application or as a part of any application or set of applications as already described.

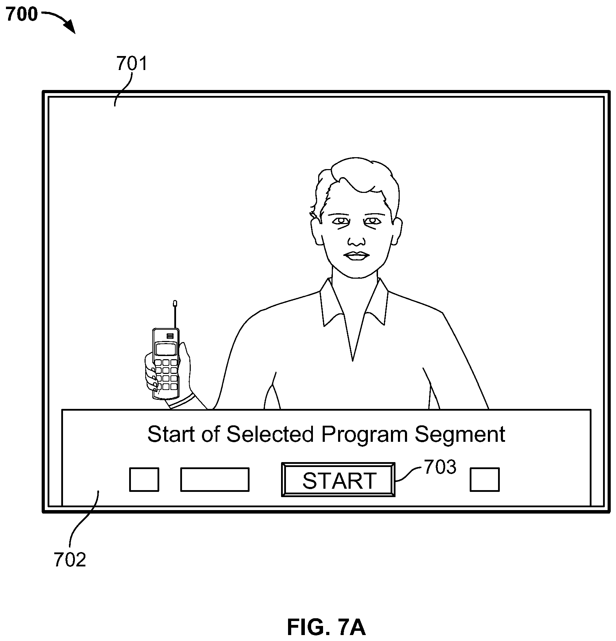

FIG. 7A shows illustration 700 of a selection of the start of a program segment of interest by a user while viewing a program. Illustration 700 shows program viewing region 701, menu 702, and start of program segment option 703. In an embodiment, program viewing region 701 may be displayed directly on the display screen of user equipment or a user equipment device. In an embodiment, program viewing region 701 may be displayed within a video region as a part of a media guidance application or any interactive application. Program viewing region 701 may include menu 702 and/or start of program segment option 703.

Menu 702 may be displayed as, for example, an overlay on top of or alongside program viewing region 701. Menu 702 may be displayed in any size. Menu 702 may be minimized by the user. Menu 702 may be maximized by the user. Menu 702 may be transparent, translucent, or opaque or any suitable combination. Menu 702 and its contents may be used by a user, for example, to indicate the start of a program segment of interest. For example, menu 702 may contain start of program segment option 703.

A user may navigate to start of program segment option 703, using a remote control, and select this option. Similarly, start of program segment option 703 may be mapped to a specific key on a remote control. As a result of pressing the specific key on the remote control, start of program segment option 703 may be selected. This option may allow the user to indicate the start time index of a program segment of interest within the running time of the program containing the program segment. Upon selection of start of program segment option 703, the start time index of the program segment of interest may be stored on the user equipment or the user equipment device. As will be discussed, the start time index may be used to populate a reference to the program segment of interest that will be stored on the local user equipment and shared with other users.

In addition, metadata associated with the program segment may be processed and stored. In particular, the application used to display the program segment may receive program segment metadata from: data encoded in the vertical blanking interval (VBI) or side band of broadcast program information, data derived based on image or video analysis of the program segment, data retrieved from a data stream that was recorded with the program segment previously received and stored, data acquired by tuning to and receiving a data stream containing the program segment identified from a link or address for a data stream, or any other suitable means for receiving program segment metadata. The program metadata may then be parsed to determine information that is used to identify the particular program associated with the program segment (e.g. program title, program genre, program descriptions, etc.) and information associated with its broadcaster (e.g. broadcaster's website address, channel number, channel name, etc.). This information may be used later when determining the availability of the program segment. This information may also be used to populate a reference to the program segment of interest that will be stored on the local user equipment and shared with other users.

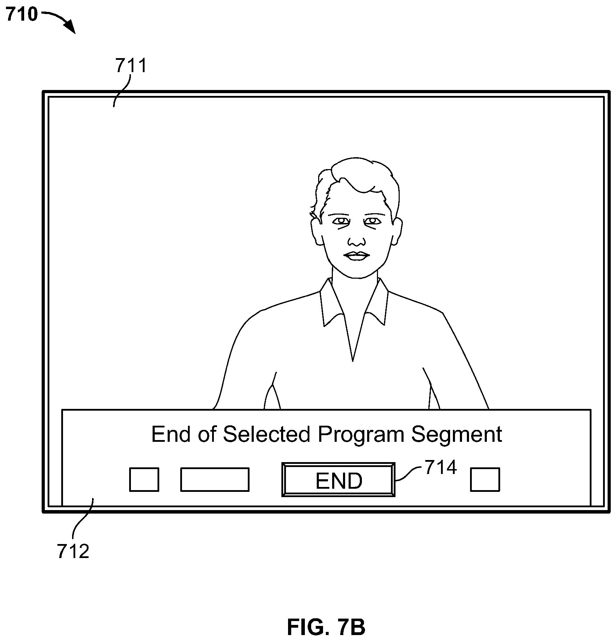

FIG. 7B shows illustration 710 of a selection of the end of a program segment of interest by a user while viewing a program. Illustration 710 shows program viewing region 711, menu 712, and end of program segment option 714. In an embodiment, program viewing region 711 may be displayed directly on the display screen of user equipment or a user equipment device. In an embodiment, program viewing region 711 may be displayed within a video region as a part of a media guidance application or any interactive application previously described. Program viewing region 711 may include menu 712 and/or end of program segment option 704.

Menu 712 may be displayed as, for example, an overlay on top of program viewing region 711. Menu 712 may be displayed in any size. Menu 712 may be minimized by the user. Menu 712 may be maximized by the user. Menu 712 may be transparent, translucent, or opaque or any suitable combination. Menu 712 and its contents may be used by a user, for example to indicate the end of a program segment of interest. For example, menu 712 may contain end of program segment option 714.

A user may navigate to end of program segment option 714, using a remote control, and select this option. Similarly, end of program segment option 714 may be mapped to a specific key on a remote control. As a result of pressing the specific key on the remote control, end of program segment option 714 may be selected. This option may allow the user to indicate the end time index of a program segment of interest during the running time of the program containing the program segment. Upon selection of end of program segment option 714, the end time index of the program segment of interest may be stored on the user equipment or the user equipment device. As will be discussed, the end time index of the program segment of interest may be used to populate a reference to the program segment of interest that will be stored on the local user equipment shared with other users.

The selection of the options associated with a start time index and an end time index of a program segment of interest, as discussed with respect to FIG. 7A and FIG. 7B, may be performed sequentially. The selection of one of the options associated with a start time index and an end time index of a program segment of interest may be performed without the other. In an embodiment, if only the start of program segment option 703 of FIG. 7A is selected (i.e. only the start time index of a program segment is set), the end time index may be set to the end time of the program associated with the program segment of interest. In an embodiment, if only the end of program segment option 714 of FIG. 7B is selected (i.e. only the end time index of a program segment is set), the start time index may be set to the start time of the program associated with the program segment of interest. A reference to the program segment of interest may be populated with the start time index and the end time index accordingly. The reference may then be stored.

In addition, FIG. 7A and FIG. 7B depict a few ways in which a program segment of interest may be flagged or identified for later use. Program segments of interest may be also be identified in any number of other ways. For example, a program segment of interest may be identified by having a user input information into the user's user equipment or user equipment device and then populating a reference associated with the program segment with the information supplied by the user. For example, the information may include keywords, prior user knowledge of start and end time indices of a portion of a program of interest, information related to the program associated with the program segment, program segment titles, and/or any information related to the fields within the reference. For example, while watching a popular late night talk show, the user may identify a ten minute program segment at the end of the talk show (e.g. a performance of a rock band) of interest to the user. The user may identify this program segment based on the ways as shown and discussed with reference to FIG. 7A and FIG. 7B. The user may identify this program segment based on prior knowledge of the start or end times of the performance of the rock band. The user may identify the program segment based on other knowledge of the information that may be populated in the fields of a reference to the program segment.

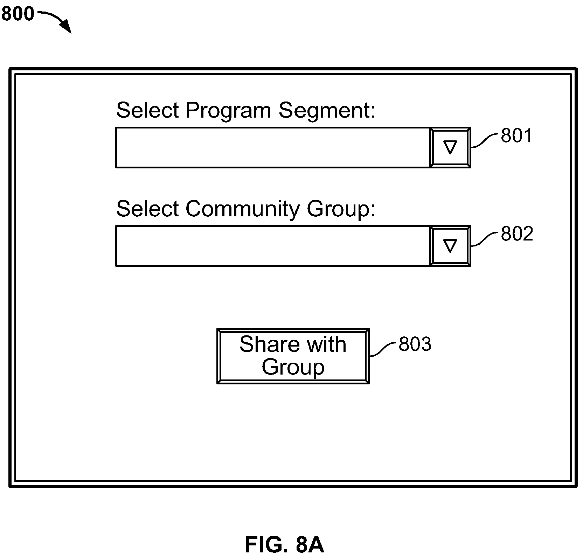

FIG. 8A shows menu 800, which may be used to notify users in a community group about a program segment of interest. Menu 800 may include select program segment option 801, select community group option 802, and share with group option 803. In an embodiment, menu 800 may be displayed directly on the display screen of user equipment or a user equipment device. In an embodiment, menu 800 may be displayed within a video viewing region as a part of a media guidance application or any interactive application previously described.

Menu 800 may be displayed as, for example, an overlay on top of or alongside a program viewing region. Menu 800 may be displayed in any size. Menu 800 may be minimized by the user. Menu 800 may be maximized by the user. Menu 800 may be transparent, translucent, or opaque or any suitable combination. Menu 800 and its contents may be used by a user, for example, to notify other users in a community group about the program segment of interest.

A user may navigate to select program segment option 801, using a remote control, and select this option. Similarly, select program segment option 801 may be mapped to a specific key on a remote control. As a result of pressing the specific key on the remote control, select program segment option 801 may be selected. This option may allow the user to view, for example, a drop down list of titles for program segments that the user may want to notify other users of a community group about. The drop down list of titles may be generated based on title fields for references to program segments stored on the local storage (e.g. storage 308 of FIG. 3) associated with user equipment or a user equipment device (e.g. equipment 402, 404, or 406 of FIG. 4). The drop down list may be generated based on program segments identified by external sources (e.g. listed program segments identified by a broadcaster or a broadcaster's website and sent as a feed to the user's user equipment). The user may then select a particular program segment from this list. For example, this list may include all program segments available to the user for viewing or downloading.

A user may then navigate to select community group option 802, using a remote control, and select this option. Similarly, select community group option 802 may be mapped to a specific key on a remote control. As a result of pressing the specific key on the remote control, select community group option 802 may be selected. This option may allow the user to view, for example, a drop down list, of community groups. The user may then select a particular community group from this list. This list may include a list of community groups of which the user is a member. The drop down list of community groups may be generated based on stored community group identifiers of groups of which the user is a member and/or community group fields for references to program segments stored on the local storage (e.g. storage 308 of FIG. 3) associated with user equipment or a user equipment device (e.g. equipment 402, 404, or 406 of FIG. 4). In addition, at step 802, a user may select only themselves to be notified about the selected program segment of interest, when it becomes available. The selection may include a selection of a group including only the user.

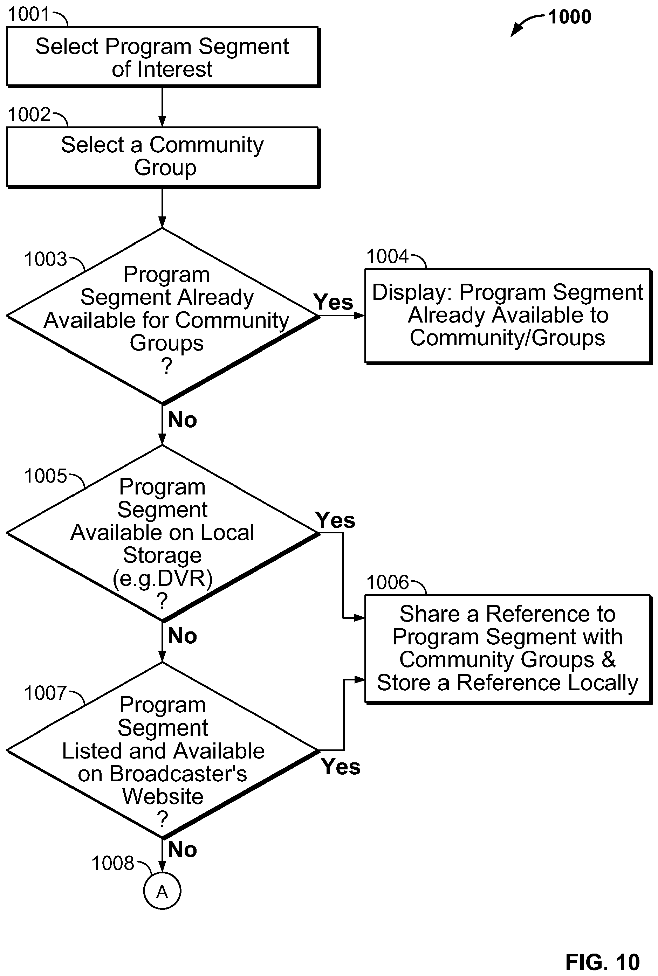

A user may then navigate to share with group option 803, using a remote control, and select this option. Similarly share with group option 803 may be mapped to a specific key on a remote control. As a result of pressing the specific key on the remote control, share with group option 803 may be selected. This option may allow the user to notify members of the selected community group about the selected program segment. As will be discussed with respect to FIG. 10, this notification may involve the user equipment or user equipment device sharing a reference associated with the selected program segment with the selected community group members.

For example, a user may identify a ten minute program segment of interest (e.g. the performance of a rock band) at the end of a late night talk show to the user as well as a community group with which the user would like to share the ten minute program segment using his or her user equipment. As will be discussed below, the ten minute program segment may or may not be available on the user's local storage (e.g. digital video recorded), it may or may not already be available to the selected community group, and it may or may not yet be available on the Internet (e.g. on the program broadcaster's website). The location of the selected ten minute program segment may automatically be determined. In addition, when this segment becomes available, the ten minute program segment may be shared and members of the selected community group may be notified of the ten minute program segment. The users of the selected community group may choose to view and/or download the ten minute program segment (e.g. showing the performance of the rock band).

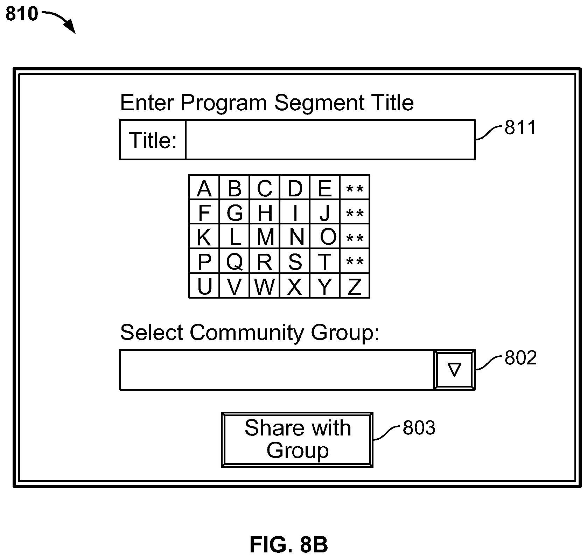

FIG. 8B shows menu 810, which may be used to name a program segment of interest and then to notify other users in a community group about the program segment of interest. Menu 810 may be substantially similar to menu 800. Menu 810 may include program segment title input box 811, select community group option 802, and share with group option 803. In an embodiment, menu 810 may be displayed directly on the display screen of user equipment or a user equipment device. In an embodiment, Menu 810 may be displayed within a video viewing region as a part of a media guidance application or any interactive application previously described.

Menu 810 may be displayed in substantially the same way and with substantially the same properties as menu 800 of FIG. 8A. Menu 810 and its contents may be used by a user, for example, to name a new program segment of interest and then to notify users in a community group about the program segment of interest. The selection of community groups may be partially automated by allowing the user to associate specific community groups with specific program metadata such as genre (e.g., sports, children's programming, news, comedy, and movies) information. For example, metadata for the program segment or its associated program, which may have been previously gathered (e.g. when the program segment was identified and/or selected) may be parsed and/or analyzed for genre related information. This genre related information may be automatically compared to online, locally stored, or user input information pertaining genres of interest to the community groups of which the user is a member for a match. For example, stored references to program segments associated with a particular community group may be analyzed to determine the type of genres in which the community group has interest and this information may be compared to the genre related information for the selected program segment for a match. The community group or groups that best match the genre of the selected program segment may be automatically identified as groups which the user may want to notify about the selected program segment.

A user may navigate to select program segment title input box 811, using a remote control, and input a title for the selected program segment identified by a start time index and an end time index. The user may input a title using an on-screen selection of letters and/or numbers. Similarly, the user may type in a title using the remote control or an input device connected to the user equipment or the user equipment device. The input of the title for the selected program segment may be accelerated by automatically including a portion of the program title associated with the program segment in title input box 811. This option may allow the user to title a program segment that the user may want to notify other users of a community group about. This option may allow the user to store the title given to the program segment along with its associated start time index and end time index. The title may be stored in the reference associated with the program segment within the segment title field. The program segment may be a program segment available to the user for viewing or downloading or a program segment that may be available to the user for viewing or downloading in the future. Select community group option 802, and share with group option 803 may be substantially the same as what is described above in relation to menu 800 of FIG. 8A. In addition, select community group option 802 may allow for the automatic selection of one or multiple community groups, using procedures such as those described above.

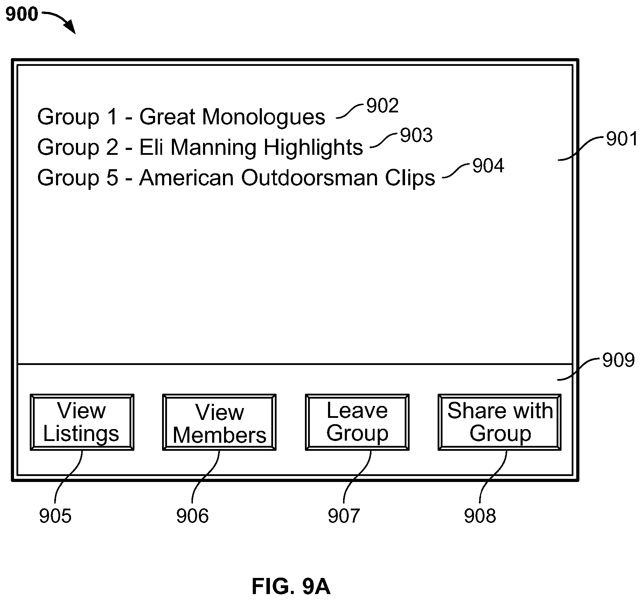

FIG. 9A shows illustration 900 of a menu which may enable users to view community groups of which they are a member, view program segment listings for these community groups, share program segments with these community groups, or leave a particular community group. Illustration 900 shows region 901, community group listings 902, 903, and 904, as well as options menu 909. Options menu 909 may contain view listings option 905, view members option 906, leave group option 907, and share with group option 908. In an embodiment, region 901 may be displayed directly on the display screen of user equipment or a user equipment device. In an embodiment, region 901 may be displayed within a video viewing region as a part of a media guidance application or any interactive application previously described. Region 901 may include options menu 909 and/or view listings option 905, view members option 906, leave group option 907, and share with group option 908.

Region 901 may be displayed in substantially the same way and with substantially the same properties as menu 800 of FIG. 8A. Region 901 and its contents may be used by a user to determine the community groups of which the user has joined and is a member. In addition, region 901 may be used by the user to view the listings of program segments that are available to be viewed or downloaded for a particular community group, to view a list of members of a particular community group, to make a selection to leave a community group, or to make a selection to notify users of a selected community group of an available program segment to be viewed or downloaded.

For example, community group listings 902, 903, and 904 may be displayed in region 901. Community group listing 902 may be indicative of a group of users interested in program segments related to great monologues. This community group may correspond to, for example, community group 603 of FIG. 6. Community group listing 903 may be indicative of users interested in program segments related to Eli Manning highlights. This community group may correspond to, for example, community group 604 of FIG. 6. Community group listing 904 may be indicative of users interested in program segments related American Outdoorsman clips. This community group may correspond to, for example, community group 607 of FIG. 6.

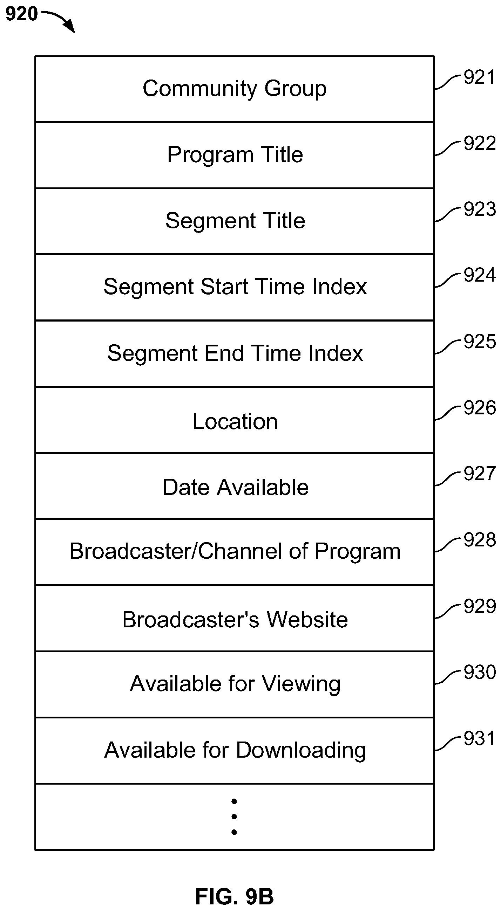

A user may navigate to a particular community group listing, using a remote control, and select the community group. The user may then select amongst the options provided in options menu 909. In particular, user may navigate to view listings option 905, view members option 906, leave group option 907, or share with group option 908 using a remote control and select this option. Similarly, each of these options may be mapped to a specific key on a remote control. As a result of pressing the specific key the corresponding option may be selected. Selection of view listings option 905 may display a listing of program segments that are available to be viewed or downloaded for the selected community group in region 901. Selection of view members option 906 may display a listing of members/users of the selected community group in region 901. The list of program segments may be generated based on the program segment title fields of stored references (e.g. references with fields similar to reference 920 of FIG. 9B, below) which have a community group field matching the selected community group listing name. A user may then select a particular program segment to view or download from the list of program segments. Selection of view members option 905 may display a list of members of the selected community group in region 901. Selection of leave group option 907 may allow the user to leave the selected community group. Selection of share with group option 908 may allow the user to notify users of the selected community group of an available program segment to be viewed or downloaded. Menu 800 of FIG. 8A may then be displayed to the user with selected community group identified in select community group option 802. The user may use menu 800 of FIG. 8A or menu 810 of FIG. 8B to notify the members of the selected group about a program segment available to be viewed or downloaded.

FIG. 9B shows reference 920 to a program segment, which may be shared with users within or outside of a community group. Reference 920 may be stored in the local memory or a local storage associated with any user equipment or user equipment device, as a part of the media content source (e.g. media content source 416 of FIG. 4), as a part of the media guidance data source (e.g. media guidance data source 418 of FIG. 4), or in any suitable combination thereof. Reference 920 may be shared using, for example, communications network 509 of FIG. 5, communications network 414 of FIG. 4, or any suitable information source. Reference 920 may include community group field 921, program title field 922, segment title field 923, segment start time index 924, segment end time index 925, location field 926, date available field 927, broadcaster/channel of program field 928, and broadcaster's website field 929, available for viewing field 930, available for downloading field 931, and other fields related to a program segment or program associated with the program segment.

Reference 920 may be associated with any program segment, for example, any program segment identified or selected by a user. Reference 920 may also be a reference received from external sources (e.g. from a feed to the user's user equipment from a program broadcaster or a program broadcaster's website) and associated with a particular program segment. Community group field 921 may be used to identify the community group with which the program segment is shared or with which community group the program segment is to be shared. Program title field 922 may be used to identify the title of the program associated with the program segment. Segment title field 923 may be used to identify the title of the program segment, for example, input by the user using program segment title input box 811 of FIG. 8B. Segment start time index 924 may be used to identify the index of the start time of the program segment within its associated program. Segment end time index 925 may be used to identify the index of the end time of the program segment within its associated program. The start time and end time indices may be adjusted by the user equipment to be appropriately synchronized with the length of the program segment (e.g. taking into account extra time added to or removed from the beginning and/or the end of a program found containing the program segment by normalizing the indices). Location field 926 may be the location (e.g. on the local storage or a link within a broadcaster's website). Date available field 927 may be a date and time in the past or the future that indicates the date and time that the program segment will be available. This field may also indicate a range of dates during which the program segment will be available. The date and time may be appropriately converted by a user equipment based on information pertaining to its location (e.g. appropriately converting the date and time to adjust it to the time zone of the location of the user equipment). Broadcaster/channel of program field 928 may be used to indicate the broadcaster and/or channel which distributed the program segment or the program associated with the program segment. Broadcaster's website field 929 may be used to indicate the Internet website address of the broadcaster. For example, if the broadcaster was a television network, the broadcaster's website address would be the address of the television network website. As another example, if the broadcaster was an Internet site, then the broadcaster's website address would be the address of the internet site. Available for viewing field 930 may indicate if the program segment is available for viewing. Available for downloading field 931 may indicate if the program segment is available for downloading. In addition, reference 920 may include descriptive information for the program segment or the program associated with the program segment. For example, this information may include a genre, a category, a theme, starring actors, creators, writers, a sports team, a portion of the title, a content rating, and broadcast times of the program or program segment. Reference 920 may also include fields indicating the format and/or encoding types of the program segment (e.g. NTSC, PAL, MPEG encoding, Xvid encoding, etc.). The format and/or encoding types of the program segment may be used, for example, to determine if the program segment can be appropriately decoded, viewed and/or downloaded by a user's user equipment or user equipment device.

The fields of reference 920 may be populated with information during the operation of any of the processes describe above or below. Reference 920 may be shared with users within or outside of a community group. Reference 920 may help user equipment and a user identify the availability of a program segment. In particular, reference 920 may help user equipment and/or a user identify if the program segment is available for viewing or downloading.

FIG. 10 shows an illustrative flowchart of process 1000 which may be used by a user to notify other users within various community groups about a program segment of interest. Process 1000 may be implemented within a media guidance application, any interactive application, or any suitable combination of applications as described above. Process 1000 may include steps 1001, 1002, 1003, 1004, 1005, 1006, 1007, and 1008. At step 1001, a user selection of a program segment of interest that the user would like to notify a community group about may be received. For example, this program segment may correspond to one of multiple program segments of interest identified by the user as discussed with reference to FIG. 7A and FIG. 7B, as described above.

At step 1002, a user selection of a community group to notify about the selected program segment of interest may be received. The selection of the community group may be made amongst any number of community groups of which the user is a member. For example, user 601 of FIG. 6 may choose amongst community groups 603, 604, or 607 of FIG. 6 of which he or she is a member. Analogously, a user may select amongst community groups 902, 903, or 904 of FIG. 9A. In addition, at step 1002, a user may select only themselves to be notified about the selected program segment of interest, when it becomes available. The selection may include a selection of a group including only the user.

At step 1003, listings of program segments already available to the community group selected may be checked to determine if the program segment selected is already listed. This check may be performed, for example, by comparing the start time index, end time index, and the program title corresponding to the selected program segment with the start time index, end time index, and the program title corresponding to the program segments listed as being available to the selected community group for a matching program segment. The check may be performed, for example, by comparing any field of a reference to the selected program segment (e.g. the fields of reference 920 of FIG. 9B) with the corresponding fields of references or metadata stored locally for the program segments (e.g. on local storage 308 of FIG. 3) and listed as being available to the selected community group. In addition, at step 1003, checks may be performed to detect partial overlaps between the selected program segment and program segments listed as being available to the selected community group. Partial overlaps may occur when only a portion of the selected program segment is found within a listed program segment. For example, partial overlap may be detected when only one of a start time and an end time index is found in the reference corresponding to a program segment listed as being available to the community group. As another example, partial overlap may be detected if the program segment listed as being available can be accessed and through video analysis it is determined that it only includes a subset of the video frames of the selected program segment. If a partial overlap is detected, the user may be queried to determine if the overlapping portion should be shared with the selected community group (in a substantially similar way as in step 1004) or if the overlapping portion should not be shared with the selected community group and step 1005 should be executed. If the listings of program segments already contain the program segment, then step 1004 may be executed. If these listings do not already contain the program segment then step 1005 may be executed.

At step 1004, a notification may be sent to the user stating that the program segment that the user selected is already available to the community group that the user selected. The notification may be displayed on the display of the user equipment or user equipment device.

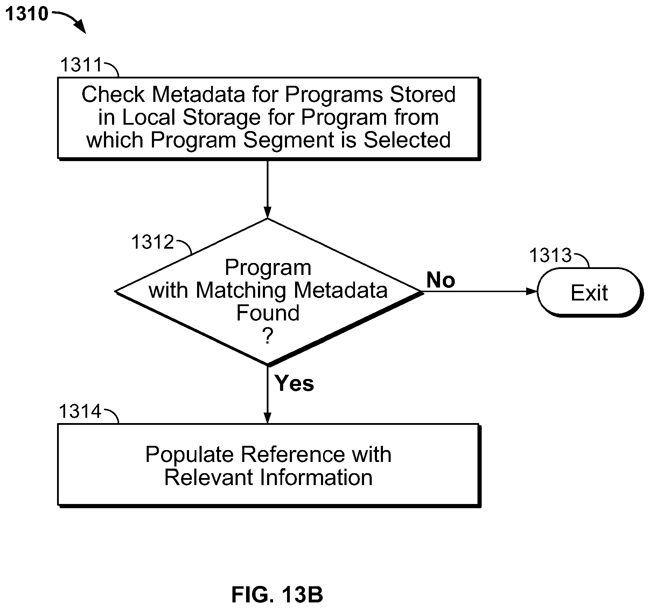

At step 1005 listings of program segments already available on a local storage (e.g. a local Digital Video Recorder connected to user equipment) may be checked to determine if the program segment selected is already listed. For example, process 1310 of FIG. 13B, described below, may be used to make this determination. The check may be performed, for example, in a substantially similar way as described with respect to step 1003, however, the fields of the selected program segment reference may be compared to metadata or fields of a reference associated with program segments listed as being available on the local storage for a match. A match may indicate that the program listings for the local storage already contain the program segment. If the program listings for the local storage already contain the program segment then step 1006 may be executed. If the listings for the local storage do not already contain the program segment then step 1007 may be executed.

At step 1006, an existing reference or a new reference to a program segment may be populated with the appropriate information (e.g. any of a location of the program segment of interest, broadcaster of the program, title of the program segment of interest, title of the program associated with the program segment of interest, the start time index and the end time index of the program segment within the program, etc., if this information is not already present in the reference) by the user's user equipment or user equipment device. For example, the fields of reference 920 of FIG. 9B may be populated with information. The reference may then be shared, using the user's user equipment or user equipment device, with users which are members of the selected community group. The sharing may include sending the reference to a network (e.g. communications network 414 of FIG. 4) and then distributing the reference amongst the user equipment or user equipment devices of members of the selected community group. The reference may also be stored locally for future access.

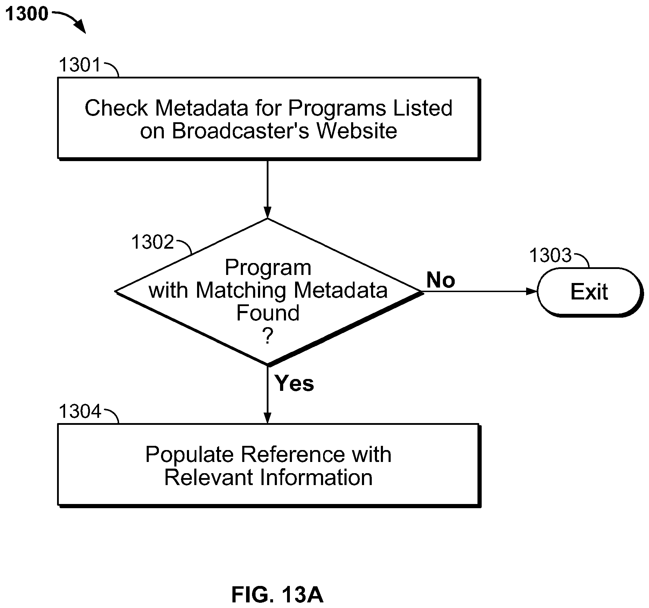

At step 1007 listings of programs or program segments already available on the corresponding program broadcaster's website may be checked (e.g. using communications network 509 to connect to the Internet) to determine if the program segment selected is already listed. For example, process 1300 of FIG. 13A may be used to make this determination. The check may be performed, for example, in a substantially similar way as described with respect to step 1003, however, the fields of the program segment reference may be compared to metadata or fields of a reference associated with program segments listed as being available on the broadcaster's website for a match. A match may indicate that the program listings for the broadcaster's website already contain the program segment. If the program listings for the broadcaster's website already contain the program segment then step 1006 may be executed. If the listings for the broadcaster's website do not already contain the program segment then step 1008 may be executed.

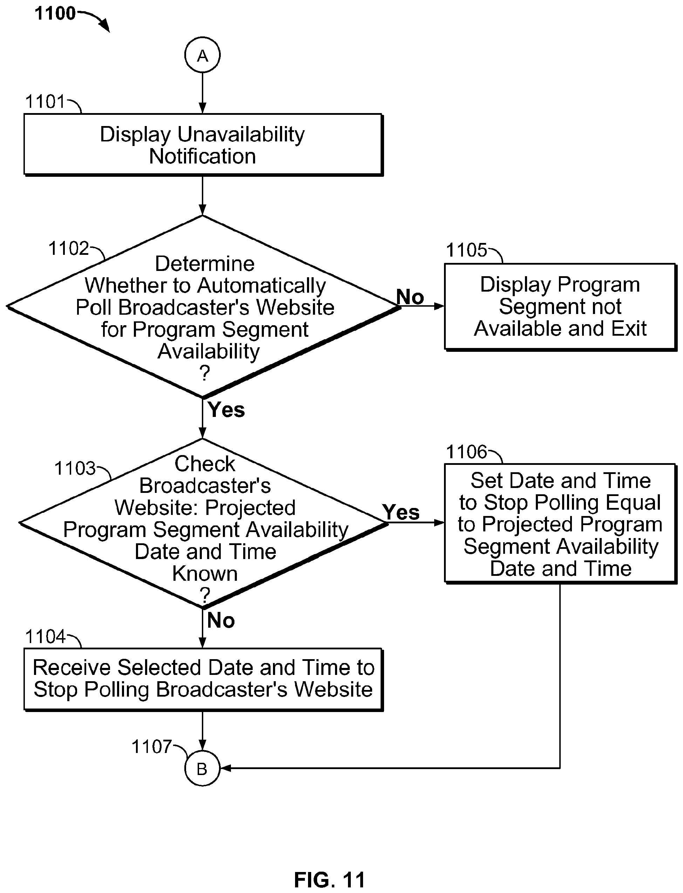

At step 1008, process 1100 of FIG. 11, which will be discussed below, may be executed in order to initiate automatic polling to check for the availability of the selected program segment. The automatic polling may be done to automatically determine when the program segment becomes available on, for example, the program broadcaster's website. Alternatively or in addition, at step 1008, the user or the user equipment may select to have the selected program segment pushed to the user equipment when it becomes available. This may be accomplished, for example, using a feed (e.g. an RSS feed), to which the user equipment may automatically subscribe until the selected program segment is received. The feed may

FIG. 11 shows an illustrative flowchart of process 1100 which may be used to allow a user to setup automatic polling of a broadcaster's website when a selected program segment of interest is currently unavailable on the website. Process 1100 may be implemented within a media guidance application, any interactive application, or any suitable combination of applications as described above. Process 1100 may include steps 1101, 1102, 1103, 1104, 1105, 1106, and 1107. At step 1101, a notification stating that the selected program segment is unavailable may be sent to the user.

At step 1102 a user selection of whether or not to automatically poll the program broadcaster's website for the availability of the selected program segment may be received. For example, the user may determine that he or she would like to be notified and/or would also like to notify other users in the community group when the selected program segment becomes available for viewing or downloading. If the user wants to automatically poll the broadcaster's website for the availability of the selected program segment, then step 1103 may be executed. If the user does not want to poll the broadcaster's website for the availability of the selected program segment, then step 1105 may be executed.

At step 1105, the user may be notified that the selected program segment is not available. Process 1100 may then exit.

At step 1103, the broadcaster's website is checked to determine if a projected availability date and time of the selected program segment is listed. If the projected availability date and time of the program segment is found, then step 1106 may be executed. Otherwise, if the projected availability date of the selected program segment is not found, then step 1104 may be executed.

At step 1104 a user selected date and time to stop polling the broadcaster's website for the selected program segment is received. This date and time may be, for example, a date and time in the future at which time the user believes that the selected program segment will become available on the broadcaster's website. This date and time may be, for example, a date and time in the future after which there will be little utility to the user in continuing to poll the broadcaster's website for the selected program segment. The selected date and time may then be used at step 1107 to determine the date and time when polling the broadcaster's website for the selected program segment will be stopped.

At step 1106 the date and time to stop polling is set equal to the projected date and time of program segment availability listed on the broadcaster's website. This date and time may then be used at step 1107 to determine the date and time when polling the broadcaster's website for the selected program segment will be stopped.

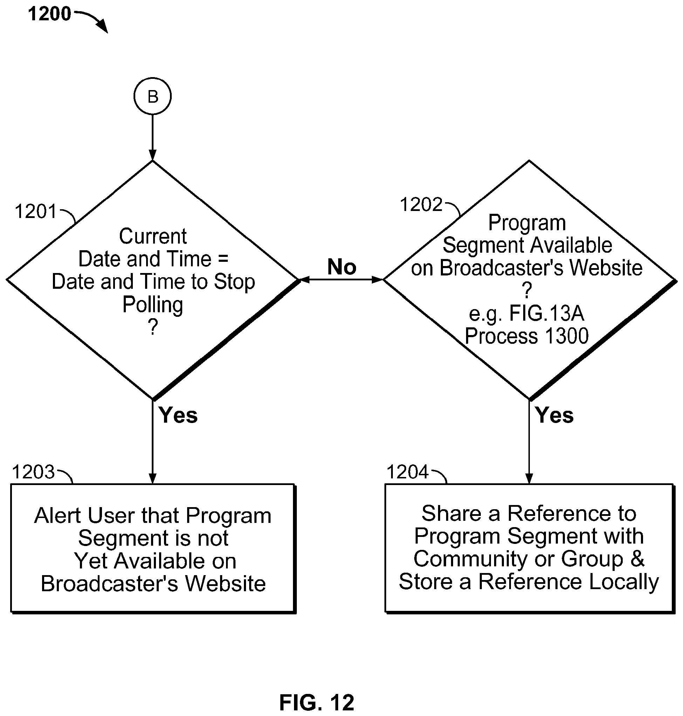

At step 1107, a polling loop may be executed to poll the broadcaster's website for the selected program segment. The polling loop may be the same polling loop shown in FIG. 12, which will be discussed below. Prior to execution of the polling loop, the date and time received from step 1104 or step 1106 may be appropriately converted by the user equipment based on information pertaining to its location (e.g. appropriately converting the date and time to adjust it to the time zone of the location of the user equipment).

FIG. 12 shows an illustrative flowchart of process 1200 which may be used to allow a user to setup automatic polling of a broadcaster's website when a selected program segment of interest is currently unavailable on the broadcaster's website, in accordance with some embodiments. Process 1200 may include steps 1201, 1202, 1203, and 1104.

At step 1201, it may be determined if the current date and time is equal to the date and time at which the polling loop should be stopped. If the current date and time does not equal the date and time at which the polling loop should be stopped, then step 1202 may be executed. If the current date and time does equal the date and time at which the polling loop should be stopped, then step 1203 may be executed. The date and time to stop polling may be determined, for example, by process 1100, by user input, by automatic means, or any suitable combination thereof.

At step 1202 a network connection or a session may be established between a user's user equipment or user equipment device and a broadcaster's website (e.g., using communications network 414 of FIG. 4 to connect to the Internet). Listings of programs or program segments already available on the corresponding program broadcaster's website may then be checked to determine if the selected program segment or the program associated with the selected program segment is already listed. For example, process 1300 of FIG. 13A, described below, may be used to make this determination. This check may also be performed, for example, by comparing the title of the program corresponding to the selected program segment with the title of programs corresponding programs listed as being available on the broadcaster's website for a match and then determining if the start time index and the end time index corresponding to the selected program segment are included in the matching program. If the broadcaster's website already contains the selected program segment then step 1204 may be executed. If the broadcaster's website does not already contain the selected program segment then step 1201 may be executed.

At step 1203, the user may be notified that the selected program segment is not yet available on the broadcaster's website. Process 1200 may then terminate.

At step 1204, a new or existing reference to a program segment may be populated with the appropriate information (e.g. any of a location of the program segment of interest, broadcaster of the program, title of the program segment of interest, title of the program associated with the program segment of interest, the start time index and the end time index of the program segment within the program, etc. may be populated if the information is not already present in the reference) by the user's user equipment or user equipment device. For example, the fields of reference 920 of FIG. 9B may be populated with information. The reference may then be shared, using the user's user equipment or user equipment device, with users which are members of the selected community group. The sharing may include sending the reference to a network (e.g. communications network 414 of FIG. 4) and then distributing the reference amongst the user equipment or user equipment devices of members of the selected community group. The reference may also be stored locally for future reference by the user.

Process 1200 may be executed using any type of applications, as described above, using any user equipment or user equipment device. Process 1200 may be executed using any type of applications operating on a remote device from the user equipment or as a web service (e.g. executed by a remote server or set of servers or some remote processing equipment). The periodicity of the execution of the polling steps in process 1200 may be determined in any number of ways. For example, the periodicity may be determined by user settings, based on information gathered about the user, determined by remote settings (e.g. available on the broadcaster's website or a remote database), by default settings on the user equipment or user equipment device executing process 1200, based on other network or system constraints, by separate remote or local processes or systems, or by any suitable combination thereof. The periodicity of polling may affect how frequently the broadcaster's website is checked for the availability of a program segment.

FIG. 13A shows an illustrative flowchart of process 1300 which may be used for detecting the availability of a selected program segment on the program broadcaster's website. Process 1300 may include steps 1301, 1302, 1303, and 1304.

At step 1301 a network connection or a session may be established between a user's user equipment or user equipment device and a broadcaster's website (e.g., using communications network 414 of FIG. 4 to connect to the Internet). At this step, the selected program segment broadcaster's website may be accessed (e.g., using the Internet) and metadata associated with the broadcaster's website may be processed. In particular, information pertaining to programs or program content that is available for viewing and/or downloading on the broadcaster's website may be gathered. For example, program identifiers or the descriptive textual information pertaining to programs or program content available for viewing and/or downloading, through the broadcaster's website, may be parsed, a semantic crawler may crawl the broadcaster's website and incorporated links to gather information related to programs or program content available for viewing and/or downloading, image or video analysis of media contained on the broadcaster's website may be performed in search of information related to programs or program content available for viewing and/or downloading, or any other suitable means for acquiring information from the broadcaster's website pertaining to programs or program content that is available for viewing and/or downloading may be used. This information may then be stored. Step 1302 may then be executed.

At step 1302, the information acquired in at step 1301 may be searched to determine whether or not any portion of it matches gathered metadata used to identify the selected program segment (e.g. metadata found in the fields of an existing reference for the program segment). The search may attempt to find exact matches for the gathered metadata identifying the program segment (e.g. program title, program descriptions, program identifiers, etc.). The search may attempt to find "fuzzy" logic matches for the gathered metadata identifying the program segment (e.g. based on ontological relationships between the acquired information and the gathered metadata identifying the program segment or based on inexact matches). If a matching program is found, the broadcaster's website may be checked to ensure that the program segment is contained within the program. This may be done, for example: by ensuring that the start time index of the selected program segment and that the end time index of the selected program segment are contained within the matching program available for viewing and/or downloading, by using image or video analysis to search for the program segment within the program available for viewing and/or downloading, or by any other suitable means to determine if the selected program segment is contained within the matching program available for viewing and/or downloading. In ensuring that the program segment is contained within the program, the start time and end time indices may be adjusted by the user equipment to be appropriately synchronized with the length of the program segment (e.g. taking into account extra time added to or removed from the beginning and/or the end of a program found containing the program segment by normalizing the indices). Embedded time code information, image or video analysis, or other gathered metadata may be used to determine offsets or rate conversions necessary to synchronize frames across multiple separate recordings of the same segment. The format and/or encoding types of the program segment may also be determined and it may be determined whether or not the program segment can be appropriately decoded, viewed, and/or downloaded by members of a selected community group. If the selected program segment is found within a matching program, step 1304 may be executed. If a matching program segment is not found, then step 1303 may be executed.

At step 1303, the program segment may not have been found on the broadcaster's website and process 1300 may be terminated. Control may be returned to a parent process and information may be passed to the parent process indicating that the program segment was not found.

At step 1304, a new or existing reference to the selected program segment may be populated with the appropriate information (e.g. any of a location of the program segment of interest, broadcaster of the program, title of the program segment of interest, title of the program associated with the program segment of interest, the start time index and the end time index of the program segment within the program, availability information, etc. may be populated if information is not already present in the reference).

FIG. 13B shows an illustrative flowchart of process 1310 which may be used for detecting the availability of a selected program segment on local storage attached to the user equipment or device (e.g. a Digital Video Recorder). Process 1300 may include steps 1311, 1312, 1313, and 1314.

At step 1311, metadata associated with the media content stored on local storage may be searched. In particular, information pertaining to programs or program content stored on the local storage may be gathered. For example, the descriptive textual information pertaining to program or program content available for viewing may be collected and parsed, image or video analysis of media contained on the local storage may be performed in search of information related to programs or program content available for viewing, program identifiers may be gathered, or any other suitable means for acquiring information pertaining to programs or program content that is available on the local storage may be used. The gathered information may then be stored. Step 1312 may then be executed.

At step 1312, the information acquired at step 1311 may be searched to determine whether or not any of it matches gathered metadata used to identify the selected program segment (e.g. metadata found in the fields of an existing reference for the selected program segment). The search may be performed, for example, in a substantially similar way as described with respect to step 1302 of FIG. 13A with the gathered metadata. If a matching program is found, the program located in local storage may be checked to ensure that the program segment is contained within the program. This may be done, for example, in a substantially similar way as described with respect to step 1302 of FIG. 13A with information associated with the selected program segment and the information associated with matching program. Embedded time code information, image or video analysis, or other gathered metadata may be used to determine offsets or rate conversions necessary to synchronize frames across multiple separate recordings of the same segment. If the selected program segment is found within a matching program, step 1314 may be executed. If a matching program segment is not found, then step 1313 may be executed.

At step 1313, the program segment may not have been found in local storage and process 1310 may exit. Control may be returned to a parent process and information may be passed to the parent process indicating that the program segment was not found.

At step 1314, a new or existing reference to the selected program segment may be populated with the appropriate information (e.g. any of a location of the program segment of interest, broadcaster of the program, title of the program segment of interest, title of the program associated with the program segment of interest, the start time index and the end time index of the program segment within the program, availability information, etc. may be populated if information is not already present in the reference).

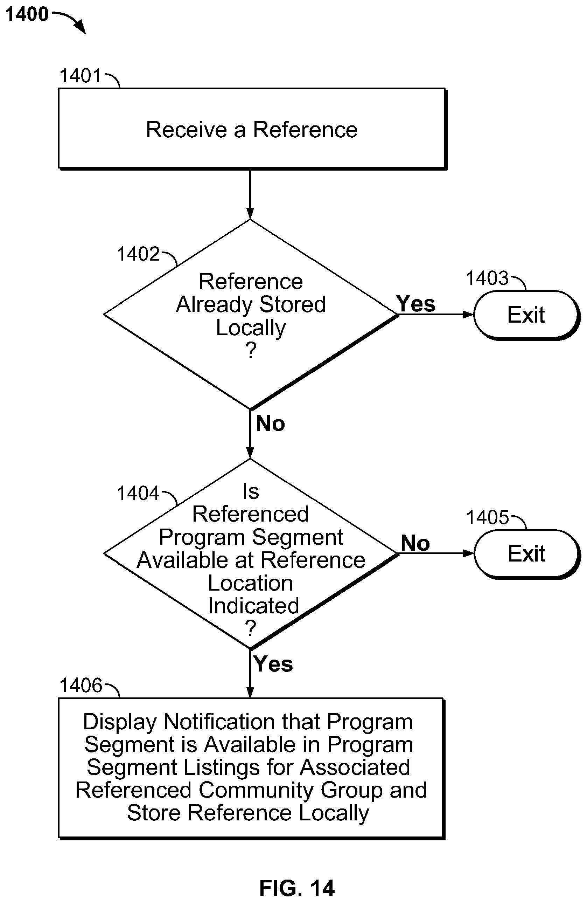

FIG. 14 shows an illustrative flowchart of process 1400 that may be used to receive a reference to a program segment sent from one user equipment of a user in a community group to a receiving user equipment of a another user in the community group. Process 1400 may be implemented within a media guidance application, any interactive application, or any suitable combination of applications as described above. Process 1400 may include steps 1401, 1402, 1403, 1404, 1405, and 1406.

At step 1401, a reference to a program segment of interest, sent from the user equipment or user equipment device of one of multiple members of a community group, is received. For example, this reference may be similar to reference 920 of FIG. 9B, and may include all or some of the information used to identify a program segment.

At step 1402, the list of references already stored locally (e.g. in a local storage) are checked to see if the reference to the program segment is already listed. This check may be performed, for example, by comparing fields in the reference (e.g. fields 921-931 in FIG. 9B) to the corresponding fields of the references already stored locally. If a substantial number of the fields of one of the references stored locally matches the fields of the received reference, then step 1403 may be executed. If a substantial number of the fields do not match, then step 1404 may be executed.

At step 1403, process 1400 may terminate, since a matching reference to the one received has been found.

At step 1404, the availability of the program segment may be verified and the received reference may be stored locally. For example, the location of the program segment indicated within the received reference in location field 926 or in broadcaster's website field 929 of FIG. 9B may be checked. If the program segment is not available, then step 1405 may be executed. If the program segment is available, then step 1406 may be executed.

At step 1405, process 1400 may terminate, since the referenced program segment is not available.

At step 1406, the title of the program segment received in the reference may be displayed in a notification on the display of the user equipment. The notification may indicate to the user associated with the user equipment that a new program segment is available in a list of available program segments. The notification may also indicate whether the program segment is available for viewing and/or whether the program segment is available for downloading. The notification may use and/or display any information from different fields of the received reference. For example, the notification may use and/or display any information from the different fields of reference 920 of FIG. 9B. The notification may also include, for example, choices that allow a user to view and/or download the new program segment.

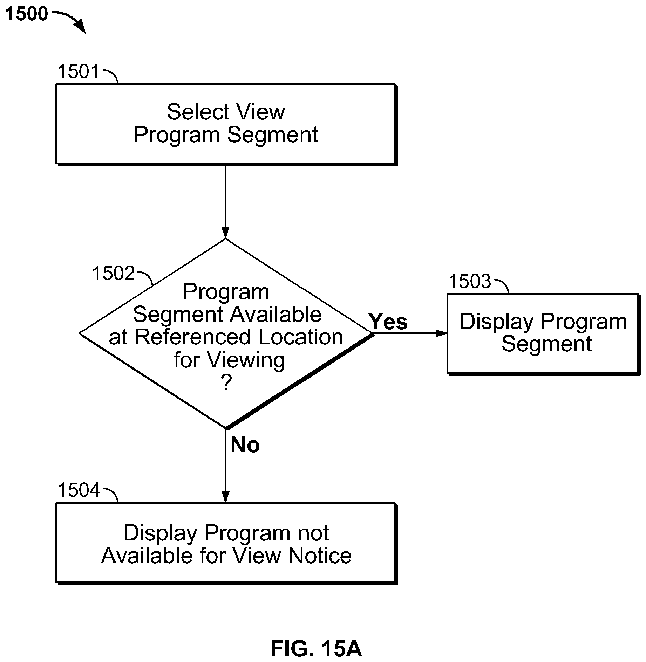

FIG. 15A shows an illustrative flowchart of process 1500 that may be used to view a program segment of interest, which a user has been notified about. Process 1500 may be implemented within a media guidance application, any interactive application, or any suitable combination of applications as described above. Process 1500 may include steps 1501, 1502, 1503, and 1504.

At step 1501, a user selection of a program segment to view is received. The selection may be of any program identified as a program segment available to the user of the user equipment for viewing. The list may be generated based on references to program segments stored locally. The selection may be based on a list of program segments associated with a particular community group and available to the user for viewing. Step 1502 may then be executed.

At step 1502, the availability of the program segment selected for viewing may be verified. For example, the location of the program segment indicated within the reference associated with the program segment (e.g. in location field 926 or in broadcaster's website field 929 of FIG. 9B) may be checked. In addition, a check may be performed to ensure that the program segment is available for viewing. If the program segment is available at the indicated location and also available for viewing, then step 1503 may be executed. If the program segment is not available at the indicated location and also not available for viewing, then step 1504 may be executed.

At step 1503, the program segment selected to be viewed may be displayed in a program viewing region on the display screen of user equipment or a user equipment device. In other embodiments, the program viewing region may be displayed within a video region as a part of a media guidance application or any interactive application.

At step 1504, a notice stating that the program segment selected for viewing is not available may be displayed on the display screen of user equipment and process 1500 may terminate.

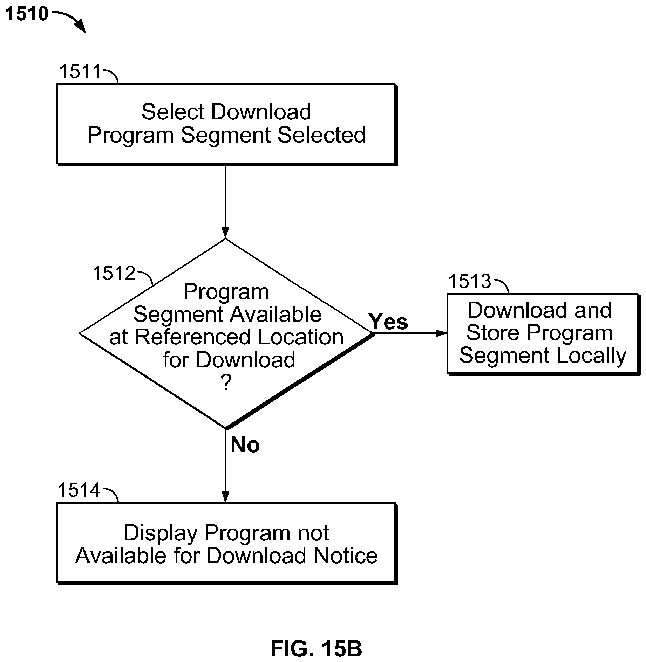

FIG. 15B shows an illustrative flowchart of process 1510 that may be used to download a program segment of interest, which a user has been notified about, in accordance with some embodiments. Process 1510 may be implemented within a media guidance application, any interactive application, or any suitable combination of applications as described above. Process 1510 may include steps 1511, 1512, 1513, and 1514.

At step 1511, a user selection of a program segment to download is received. The selection may be of any program identified as a program segment available to the user of the user equipment for downloading. The selection may be based on a list of program segments associated with a particular community group and available to the user for downloading. Step 1512 may then be executed.

At step 1512, the availability of the program segment selected for downloading may be verified. For example, the location of the program segment indicated within the reference associated with the program segment (e.g. in location field 926 or in broadcaster's website field 929 of FIG. 9B) may be checked. In addition, a check may be performed to ensure that the program segment is available for downloading. If the program segment is available at the indicated location and also available for downloading, then step 1513 may be executed. If the program segment is not available at the indicated location or not available for downloading, then step 1514 may be executed.

At step 1513, the program segment selected for downloading may be downloaded and stored in a local storage associated with a user equipment or a user equipment device.

At step 1514, a notice stating that the program segment selected for downloading is not available may be displayed on the display screen of user equipment and process 1510 may terminate.

It should be understood that the steps of processes 1000, 1100, 1200, 1300, 1310, 1400, 1500, and 1510 are merely illustrative. Any of the steps of process 1000, 1100, 1200, 1300, 1310, 1400, 1500, and 1510 may be modified, omitted, or rearranged, two or more of the steps may be combined, or any additional steps may be added, without departing from the scope of the present invention.

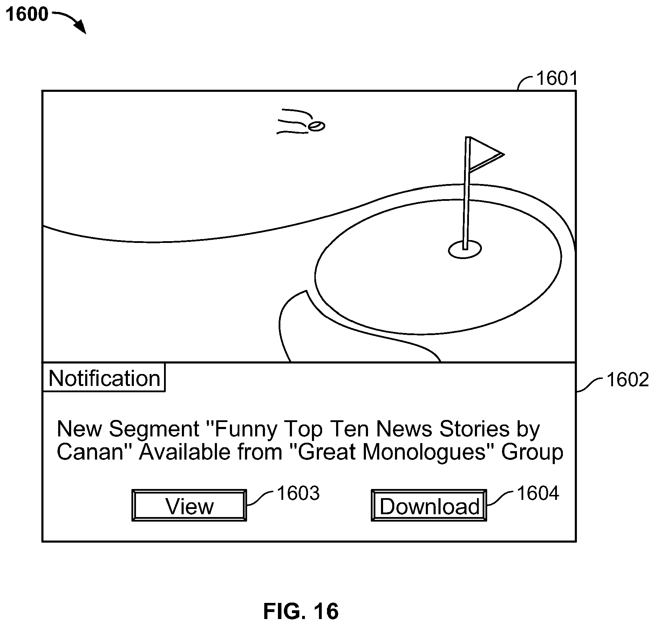

FIG. 16 shows illustration 1600 of a notification received by a user to indicate the availability of a new program segment in a community group, in accordance with some embodiments. Illustration 1600 shows program viewing region 1601, notification 1602, view program segment option 1603, and download program segment option 1604. In some embodiments, program viewing region 1601 may be displayed directly on the display screen of user equipment or a user equipment device. In other embodiments, program viewing region 1601 may be displayed within a video region as a part of a media guidance application or any interactive application. Program viewing region 1601 may include notification 1602, and/or view program segment option 1603 and download program segment option 1604.

Notification 1602 may be displayed in substantially the same way and with substantially the same properties as menu 702 of FIG. 7A. Notification 1602 and its contents may be used, for example, to indicate the availability of a new program segment of interest to a user. For example, notification 1602 may indicate to the user associated with the user equipment that a new program segment is available in a list of available program segments. Notification 1602 may use and/or display any information from different fields of a received reference associated with the program segment. For example, the notification 1602 may use and/or display any information from the different fields of reference 920 of FIG. 9B. Notification 1602 may also contain view program segment option 1603 and download program segment option 1604 if the received reference indicates that the program segment is available for viewing or downloading.

A user may navigate to view program segment option 1603 using a remote control and select this option. Similarly, view program segment option 1603 may be mapped to a specific key on a remote control. As a result of pressing the specific key on the remote control, view program segment option 1603 may be selected. This option may allow the user to indicate the he or she would like to view the program segment listed in notification 1602. Upon selection of view program segment option 1603, process 1500 of FIG. 15A may be executed.

A user may navigate to download program segment option 1604 using a remote control and select this option. Similarly, download program segment option 1604 may be mapped to a specific key on a remote control. As a result of pressing the specific key on the remote control, download program segment option 1604 may be selected. This option may allow the user to indicate the he or she would like to download the program segment listed in notification 1602. Upon selection of download program segment option 1604, process 1510 of FIG. 15B may be executed.

For example, when a selected ten minute program segment showing the performance of a band on a late night talk show becomes available, the ten minute program segment may be shared and members of the selected community group may be notified of the ten minute program segment. The users of the selected community group may choose to view and/or download the ten minute program segment (e.g. showing the performance of the rock band).

## Claims

1. A method for notifying a community of users about the availability of a program segment, the method comprising:
receiving a user selection of a segment of a program using user equipment (402, 404, 406, 501-508), including receiving a start time index of the program segment, and receiving an end time index of the program segment, wherein the start time index and the end time index are within a running time of the program containing the program segment;
receiving program segment metadata including an address of an internet site;
using the user equipment (402, 404, 406, 501-508), to store, in fields of a reference (920) to the program segment, the start time index of the selected program segment, the end time index of the selected program segment and the received program segment metadata;
using the user equipment (402, 404, 406, 501-508) to check the internet site for available program listings;
comparing at least one of the fields of the reference (920) to the program listings to determine whether a program listing contains the program segment to which the reference (920) refers;
determining that the selected program segment is available from the internet site and notifying, using the user equipment (402, 404, 406, 501-508), the community of users about the selected program segment using the reference (920) including the address of the internet site, the start time index and the end time index.

2. The method of claim 1, wherein the storing, in the fields of a reference to the program segment, further comprises storing at least one of: a community group (921), a program title (922), a segment title (923), a location (926), a date available (927), a broadcaster of the program (928), a broadcaster's website (929), viewing availability (930), downloading availability (931), format of the program segment, and encoding type of the program segment.

3. The method of claims 1 or 2, wherein receiving the reference further comprises receiving a reference from a feed to the user equipment from a program broadcaster's website.

4. The method of any of claims 1-3, wherein the start time index and the end time index are adjusted by the user equipment to be synchronized with the length of the program segment.

5. The method of claim 3, wherein the location (926) and the date available (927) are stored in the fields, and the date available is converted by the user equipment based on the data in the location field.

6. The method of claim 3, where the format and/or the encoding type of the program segment are stored in the fields, and the respective format and/or encoding type of the program is used to determine if the program segment can be appropriately decoded, viewed and/or downloaded by the user equipment.

7. The method of any of claims 1-6, wherein the reference is shared with users within the community.

8. A computer program comprising computer readable instructions that, when executed by one or more processors, cause said one or more processors to perform a method according to any of the preceding claims.

9. A system for notifying a community of users about the availability of a program segment, the system comprising:
means for receiving a user selection of a segment of a program using user equipment (402, 404, 406, 501-508), including receiving a start time index of the program segment, and receiving an end time index of the program segment, wherein the start time index and the end time index are within a running time of the program containing the program segment;
means for receiving program segment metadata including an address of an internet site;
means for using the user equipment (402, 404, 406, 501-508), to store, in fields of a reference (920) to the program segment, the start time index of the selected program segment, the end time index of the selected program segment and the received program segment metadata;
means for using the user equipment (402, 404, 406, 501-508) to check the internet site for available program listings;
means for comparing at least one of the fields of the reference (920) to the program listings to determine whether a program listing contains the program segment to which the reference (920) refers;
means for determining that the selected program segment is available from the internet site and notifying, using the user equipment (402, 404, 406, 501-508), the community of users about the selected program segment using the reference (920) including the address of the internet site, the start time index and the end time index.

10. The system of claim 9, wherein the means for storing, in the fields of a reference to the program segment, further comprises means for storing at least one of: a community group (921), a program title (922), a segment title (923), a location (926), a date available (927), a broadcaster of the program (928), a broadcaster's website (929), viewing availability (930), downloading availability (931), format of the program segment, and encoding type of the program segment.

11. The system of claims 9 or 10, wherein the means for receiving the reference further comprises means for receiving a reference from a feed to the user equipment from a program broadcaster's website.

12. The system of any of claims 9-11, wherein the user equipment further comprises means for adjusting the start time index and the end time index by the user equipment to be synchronized with the length of the program segment.

13. The system of claim 10, wherein the location (926) and the date available (927) are stored in the fields, and the user equipment further comprises means for converting the date available based on the data in the location field.

14. The system of claim 10, where the format and/or the encoding type of the program segment are stored in the fields, and the user equipment further comprises means for using the respective format and/or encoding type of the program to determine if the program segment can be appropriately decoded, viewed and/or downloaded by the user equipment.

15. The system of any of claims 9-14, wherein the system further comprises means for sharing the reference with users within the community.

## Patentansprüche

1. Verfahren zur Benachrichtigung einer Benutzergemeinschaft über die Verfügbarkeit eines Programmsegments, wobei das Verfahren Folgendes umfasst:
Empfangen einer Benutzerauswahl eines Segments eines Programms unter Verwendung von Benutzergeräten (402, 404, 406, 501-508), einschließlich des Empfangens eines Startzeitindex des Programmsegments und des Empfangens eines Endzeitindex des Programmsegments, wobei der Startzeitindex und der Endzeitindex innerhalb einer Laufzeit des Programms liegen, das das Programmsegment enthält;
Empfangen von Programmsegment-Metadaten, einschließlich einer Adresse einer Internetseite;
Verwenden der Benutzergeräte (402, 404, 406, 501-508), um in Feldern einer Referenz (920) auf das Programmsegment den Startzeitindex des ausgewählten Programmsegments, den Endzeitindex des ausgewählten Programmsegments und die empfangenen Programmsegment-Metadaten zu speichern;
Verwenden der Benutzergeräte (402, 404, 406, 501-508), um die Internetseite auf verfügbare Programmlisten zu überprüfen;
Vergleichen mindestens eines der Felder der Referenz (920) mit den Programmlisten, um festzustellen, ob eine Programmliste das Programmsegment enthält, auf das sich die Referenz (920) bezieht;
Bestimmen, dass das ausgewählte Programmsegment auf der Internetseite verfügbar ist, und Benachrichtigen der Benutzergemeinschaft unter Verwendung von Benutzergeräten (402, 404, 406, 501-508) über das ausgewählte Programmsegment unter Verwendung der Referenz (920), einschließlich der Adresse der Internetseite, des Startzeitindex und des Endzeitindex.

2. Verfahren nach Anspruch 1, wobei das Speichern in den Feldern einer Referenz auf das Programmsegment ferner das Speichern von mindestens einem der Folgenden umfasst: einer Community-Gruppe (921), einem Programmtitel (922), einem Segmenttitel (923), einem Ort (926), einem verfügbaren Datum (927), einem Sender des Programms (928), einer Website des Senders (929), einer Anzeigeverfügbarkeit (930), einer Downloadverfügbarkeit (931), einem Format des Programmsegments und einem Codierungstyp des Programmsegments.

3. Verfahren nach Anspruch 1 oder 2, wobei das Empfangen der Referenz ferner das Empfangen einer Referenz aus einer Zuführung zu den Benutzergeräten von einer Website eines Programmsenders umfasst.

4. Verfahren nach einem der Ansprüche 1 bis 3, wobei der Startzeitindex und der Endzeitindex durch die Benutzergeräte angepasst werden, um mit der Länge des Programmsegments synchronisiert zu werden.

5. Verfahren nach Anspruch 3, wobei der Standort (926) und das verfügbare Datum (927) in den Feldern gespeichert werden und das verfügbare Datum von den Benutzergeräten basierend auf den Daten im Standortfeld konvertiert wird.

6. Verfahren nach Anspruch 3, wobei das Format und/oder der Codierungstyp des Programmsegments in den Feldern gespeichert sind und das jeweilige Format und/oder der jeweilige Codierungstyp des Programms verwendet wird, um zu bestimmen, ob das Programmsegment von den Benutzergeräten angemessen decodiert, angezeigt und/oder heruntergeladen werden kann.

7. Verfahren nach einem der Ansprüche 1 bis 6, wobei die Referenz mit Benutzern innerhalb der Gemeinschaft geteilt wird.

8. Computerprogramm, das computerlesbare Anweisungen umfasst, die, wenn sie von einem oder mehreren Prozessoren ausgeführt werden, den einen oder die mehreren Prozessoren dazu veranlassen, ein Verfahren nach einem der vorhergehenden Ansprüche durchzuführen.

9. System zur Benachrichtigung einer Benutzergemeinschaft über die Verfügbarkeit eines Programmsegments, wobei das System Folgendes umfasst:
Mittel zum Empfangen einer Benutzerauswahl eines Segments eines Programms unter Verwendung von Benutzergeräten (402, 404, 406, 501-508), einschließlich des Empfangens eines Startzeitindex des Programmsegments und des Empfangens eines Endzeitindex des Programmsegments, wobei der Startzeitindex und der Endzeitindex innerhalb einer Laufzeit des Programms liegen, das das Programmsegment enthält;
Mittel zum Empfangen von Programmsegment-Metadaten, einschließlich einer Adresse einer Internetseite;
Mittel zum Verwenden der Benutzergeräte (402, 404, 406, 501-508), um in Feldern einer Referenz (920) auf das Programmsegment den Startzeitindex des ausgewählten Programmsegments, den Endzeitindex des ausgewählten Programmsegments und die empfangenen Programmsegment-Metadaten zu speichern;
Mittel zum Verwenden der Benutzergeräte (402, 404, 406, 501-508), um die Internetseite auf verfügbare Programmlisten zu überprüfen;
Mittel zum Vergleichen mindestens eines der Felder der Referenz (920) mit den Programmlisten, um zu bestimmen, ob eine Programmliste das Programmsegment enthält, auf das sich die Referenz (920) bezieht;
Mittel zum Bestimmen, dass das ausgewählte Programmsegment auf der Internetseite verfügbar ist, und zum Benachrichtigen der Benutzergemeinschaft unter Verwendung von Benutzergeräten (402, 404, 406, 501-508) über das ausgewählte Programmsegment unter Verwendung der Referenz (920), einschließlich der Adresse der Internetseite, des Startzeitindex und des Endzeitindex.

10. System nach Anspruch 9, wobei die Mittel zum Speichern in den Feldern einer Referenz auf das Programmsegment ferner Mittel zum Speichern von mindestens einem der Folgenden umfassen: eine Community-Gruppe (921), einen Programmtitel (922), einen Segmenttitel (923), einen Ort (926), einem verfügbaren Datum (927), einem Sender des Programms (928), einer Website des Senders (929), einer Anzeigeverfügbarkeit (930), einer Downloadverfügbarkeit (931), einem Format des Programmsegments und einem Codierungstyp des Programmsegments.

11. System nach Anspruch 9 oder 10, wobei die Mittel zum Empfangen der Referenz ferner Mittel zum Empfangen einer Referenz aus einer Zuführung zu den Benutzergeräten von einer Website eines Programmsenders umfassen.

12. System nach einem der Ansprüche 9 bis 11, wobei die Benutzergeräte ferner Mittel zum Anpassen des Startzeitindex und des Endzeitindex durch die Benutzergeräte umfassen, um mit der Länge des Programmsegments synchronisiert zu werden.

13. System nach Anspruch 10, wobei der Standort (926) und das verfügbare Datum (927) in den Feldern gespeichert sind und die Benutzergeräte ferner Mittel zum Konvertieren des verfügbaren Datums basierend auf den Daten im Standortfeld umfassen.

14. System nach Anspruch 10, wobei das Format und/oder der Codierungstyp des Programmsegments in den Feldern gespeichert sind und die Benutzergeräte ferner Mittel zum Verwenden des jeweiligen Formats und/oder Codierungstyps des Programms umfassen, um zu bestimmen, ob das Programmsegment von den Benutzergeräten angemessen decodiert, angezeigt und/oder heruntergeladen werden kann.

15. System nach einem der Ansprüche 9 bis 14, wobei das System ferner Mittel zum Teilen der Referenz mit Benutzern innerhalb der Gemeinschaft umfasst.

## Revendications

1. Procédé de notification à une communauté d'utilisateurs de la disponibilité d'un segment de programme, le procédé comprenant :
la réception d'une sélection d'utilisateur d'un segment d'un programme à l'aide d'un équipement utilisateur (402, 404, 406, 501-508), comportant la réception d'un indice d'heure de début du segment de programme, et la réception d'un indice d'heure de fin du segment de programme, dans lequel l'indice d'heure de début et l'indice d'heure de fin sont dans un temps d'exécution du programme contenant le segment de programme ;
la réception de métadonnées de segments de programme comportant une adresse d'un site Internet ;
l'utilisation de l'équipement utilisateur (402, 404, 406, 501-508), pour stocker, dans des champs d'une référence (920) au segment de programme, l'indice de temps de début du segment de programme sélectionné, l'indice de temps de fin du segment de programme sélectionné et les métadonnées de segment de programme reçues ;
l'utilisation de l'équipement utilisateur (402, 404, 406, 501-508) pour vérifier sur le site Internet les listes de programmes disponibles ;
la comparaison d'au moins l'un des champs de la référence (920) aux listes de programmes pour déterminer si une liste de programmes contient le segment de programme auquel la référence (920) fait référence ;
la détermination que le segment de programme sélectionné est disponible à partir du site Internet et la notification, à l'aide de l'équipement utilisateur (402, 404, 406, 501-508), la communauté d'utilisateurs sur le segment de programme sélectionné à l'aide de la référence (920) comportant l'adresse du site Internet, l'indice de l'heure de début et l'indice de l'heure de fin.

2. Procédé selon la revendication 1, dans lequel le stockage, dans les champs d'une référence au segment de programme, comprend également le stockage d'au moins l'un des éléments suivants : un groupe communautaire (921), un titre de programme (922), un titre de segment (923), un emplacement (926), une date disponible (927), un diffuseur du programme (928), un site Web d'un diffuseur (929), une disponibilité de visualisation (930), une disponibilité de téléchargement (931), un format du segment de programme, et un type de codage du segment de programme.

3. Procédé selon les revendications 1 ou 2, dans lequel la réception de la référence comprend également la réception d'une référence provenant d'un flux à l'équipement utilisateur à partir du site Web d'un diffuseur de programme.

4. Procédé selon l'une quelconque des revendications 1 à 3, dans lequel l'indice de temps de début et l'indice de temps de fin sont ajustés par l'équipement utilisateur pour être synchronisés avec la longueur du segment de programme.

5. Procédé selon la revendication 3, dans lequel l'emplacement (926) et la date disponible (927) sont stockés dans les champs, et la date disponible est convertie par l'équipement utilisateur sur la base des données dans le champ d'emplacement.

6. Procédé selon la revendication 3, dans lequel le format et/ou le type de codage du segment de programme sont stockés dans les champs, et le format et/ou le type de codage respectif du programme sont utilisés pour déterminer si le segment de programme peut être décodé, visualisé et/ou téléchargé de manière appropriée par l'équipement utilisateur.

7. Procédé selon l'une quelconque des revendications 1 à 6, dans lequel la référence est partagée avec des utilisateurs au sein de la communauté.

8. Programme informatique comprenant des instructions lisibles par ordinateur qui, lorsqu'elles sont exécutées par un ou plusieurs processeurs, amènent lesdits un ou plusieurs processeurs à réaliser un procédé selon l'une quelconque des revendications précédentes.

9. Système de notification à une communauté d'utilisateurs de la disponibilité d'un segment de programme, le système comprenant :
des moyens de réception d'une sélection d'utilisateur d'un segment d'un programme à l'aide d'un équipement utilisateur (402, 404, 406, 501-508), comportant la réception d'un indice d'heure de début du segment de programme, et la réception d'un indice d'heure de fin du segment de programme, dans lequel l'indice d'heure de début et l'indice d'heure de fin sont dans un temps d'exécution du programme contenant le segment de programme ;
des moyens de réception de métadonnées de segments de programme comportant une adresse d'un site Internet ;
des moyens d'utilisation de l'équipement utilisateur (402, 404, 406, 501-508), pour stocker, dans des champs d'une référence (920) au segment de programme, l'indice de temps de début du segment de programme sélectionné, l'indice de temps de fin du segment de programme sélectionné et les métadonnées de segment de programme reçues ;
des moyens d'utilisation de l'équipement utilisateur (402, 404, 406, 501-508) pour vérifier sur le site Internet les listes de programmes disponibles ;
des moyens de comparaison d'au moins l'un des champs de la référence (920) aux listes de programmes pour déterminer si une liste de programmes contient le segment de programme auquel la référence (920) fait référence ;
des moyens de détermination que le segment de programme sélectionné est disponible à partir du site Internet et de notification, à l'aide de l'équipement utilisateur (402, 404, 406, 501-508), la communauté d'utilisateurs sur le segment de programme sélectionné à l'aide de la référence (920) comportant l'adresse du site Internet, l'indice de l'heure de début et l'indice de l'heure de fin.

10. Système selon la revendication 9, dans lequel les moyens de stockage, dans les champs d'une référence au segment de programme, comprennent également les moyens de stockage d'au moins l'un des éléments suivants : un groupe communautaire (921), un titre de programme (922), un titre de segment (923), un emplacement (926), une date disponible (927), un diffuseur du programme (928), un site Web d'un diffuseur (929), une disponibilité de visualisation (930), une disponibilité de téléchargement (931), un format du segment de programme, et un type de codage du segment de programme.

11. Système selon les revendications 9 ou 10, dans lequel les moyens de réception de la référence comprennent également des moyens de réception d'une référence provenant d'un flux à l'équipement utilisateur à partir du site Web d'un diffuseur de programme.

12. Système selon l'une quelconque des revendications 9 à 11, dans lequel l'équipement utilisateur comprend également des moyens d'ajustement de l'indice de temps de début et de l'indice de temps de fin par l'équipement utilisateur pour être synchronisés avec la longueur du segment de programme.

13. Système selon la revendication 10, dans lequel l'emplacement (926) et la date disponible (927) sont stockés dans les champs, et l'équipement utilisateur comprend également des moyens de conversion de la date disponible sur la base des données dans le champ d'emplacement.

14. Système selon la revendication 10, dans lequel le format et/ou le type de codage du segment de programme sont stockés dans les champs, et l'équipement utilisateur comprend également des moyens d'utilisation du format et/ou du type de codage respectif du programme pour déterminer si le segment de programme peut être décodé, visualisé et/ou téléchargé de manière appropriée par l'équipement utilisateur.

15. Système selon l'une quelconque des revendications 9 à 14, dans lequel le système comprend également des moyens de partage de la référence avec des utilisateurs au sein de la communauté.
